(19) **Europäisches Patentamt European Patent Office Office européen des brevets**

(11) **EP 4 716 110 A1**

(12) **EUROPEAN PATENT APPLICATION**

(43) Date of publication:
25.03.2026 Bulletin 2026/13

(21) Application number: 25202483.1

(22) Date of filing: 16.09.2025

(51) International Patent Classification (IPC):
*H04B 7/06* (2006.01)     *H04L 25/02* (2006.01)

(52) Cooperative Patent Classification (CPC):
**H04B 7/0617; H04B 7/063; H04L 25/0248;**
H04L 25/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.09.2024  FI 20246152**

(71) Applicant: **Nokia Solutions and Networks Oy
02610 Espoo (FI)**

(72) Inventors:
• **MACAGNANO, Davide**
**Oulu (FI)**
• **VEHKAPERÄ, Mikko**
**Oulu (FI)**
• **QIU, Shuang**
**Stuttgart (DE)**
• **NUZMAN, Carl**
**Union (US)**

(74) Representative: **Nokia EPO representatives
Nokia Technologies Oy
Karakaari 7
02610 Espoo (FI)**

(54) **LOW-COMPLEXITY BEAMFORMING USING COVARIANCE COMPRESSION**

(57)     According to an aspect, there is provided an apparatus configured to perform the following. The apparatus obtains a plurality of channel matrices corresponding to a plurality of frequencies. The apparatus selects a compression matrix according to a compression matrix selection scheme. The apparatus calculates, based on the plurality of channel matrices and the compression matrix, a plurality of compressed channel matrices and, based on the plurality of channel matrices and the plurality of compressed channel matrices, a semi-compressed short-term channel covariance matrix. The apparatus calculates one or more approximate short-term eigenvectors and/or eigenvalues of a short-term channel covariance matrix based on an approximation of the short-term channel covariance matrix and transmits the one or more approximate short-term eigenvectors and/or eigenvalues to a distributed unit. The approximation of the short-term channel covariance matrix is based on the semi-compressed short-term channel covariance matrix and the compression matrix.

FIG. 2

**Description**

TECHNICAL FIELD

Various example embodiments relate to wireless communications.

BACKGROUND

Massive multiple input multiple output (MIMO) is a wireless communication technology that utilizes a large number of antennas at a base station to serve multiple terminal devices simultaneously. While in traditional MIMO systems, there are typically only a few antennas at the base station, in massive MIMO systems, the number of antennas may be in the order of tens or hundreds. Massive MIMO is used, e.g., in 5G communication systems and will continue to evolve in 6G to extreme MIMO (eMIMO) systems with 128 or even 256 antennas (and thus also the same number of transceiver chains). The very large number of antennas provides sufficient spatial degrees of freedom which can significantly improve the spectrum efficiency by transmitting multiple streams at the same time by using beamforming/-precoding.

SUMMARY

According to an aspect, there is provided the subject matter of the independent claims. Embodiments are defined in the dependent claims.
According to a first aspect, there is provided an apparatus comprising:

at least one processor; and
at least one memory storing instructions that, when executed by the at least one processor, cause the apparatus at least to perform:

obtaining a plurality of channel matrices corresponding to a plurality of frequencies;
selecting a compression matrix for reducing a size of the plurality of channel matrices according to a compression matrix selection scheme;
calculating, based on the plurality of channel matrices and the compression matrix, a plurality of compressed channel matrices;
calculating, based on the plurality of channel matrices and the plurality of compressed channel matrices, a semi-compressed short-term channel covariance matrix; and
performing at least one of:

- transmitting the semi-compressed short-term channel covariance matrix and the compression matrix to a distributed unit of a distributed access node;
- calculating one or more approximate short-term eigenvectors and/or one or more approximate short-term eigenvalues of a short-term channel covariance matrix based on an approximation of the short-term channel covariance matrix and transmitting the one or more approximate short-term eigenvectors and/or the one or more approximate short-term eigenvalues to the distributed unit of the distributed access node, wherein the approximation of the short-term channel covariance matrix is based on the semi-compressed short-term channel covariance matrix and the compression matrix; or
- calculating an updated semi-compressed long-term channel covariance matrix based at least on a previous semi-compressed long-term channel covariance matrix and the semi-compressed short-term channel covariance matrix, calculating one or more approximate long-term eigenvectors and/or one or more approximate long-term eigenvalues of a long-term channel covariance matrix based on an approximation of the long-term channel covariance matrix, and transmitting the one or more approximate long-term eigenvectors and/or the one or more approximate long-term eigenvalues to the distributed unit of the distributed access node, the previous semi-compressed long-term channel covariance matrix being maintained in the at least one memory or in at least one external memory accessible by the apparatus, and the approximation of the long-term channel covariance matrix being based on the updated semi-compressed long-term channel covariance matrix and the compression matrix.

According to a second aspect, there is a method comprising:

obtaining a plurality of channel matrices corresponding to a plurality of frequencies;

selecting a compression matrix for reducing a size of the plurality of channel matrices according to a compression matrix selection scheme;

calculating, based on the plurality of channel matrices and the compression matrix, a plurality of compressed channel matrices;

calculating, based on the plurality of channel matrices and the plurality of compressed channel matrices, a semi-compressed short-term channel covariance matrix; and

performing at least one of:

- transmitting the semi-compressed short-term channel covariance matrix and the compression matrix to a distributed unit of a distributed access node;
- calculating one or more approximate short-term eigenvectors and/or one or more approximate short-term eigenvalues of a short-term channel covariance matrix based on an approximation of the short-term channel covariance matrix and transmitting the one or more approximate short-term eigenvectors and/or the one or more approximate short-term eigenvalues to the distributed unit of the distributed access node, wherein the approximation of the short-term channel covariance matrix is based on the semi-compressed short-term channel covariance matrix and the compression matrix; or
- calculating an updated semi-compressed long-term channel covariance matrix based at least on a previous semi-compressed long-term channel covariance matrix and the semi-compressed short-term channel covariance matrix, calculating one or more approximate long-term eigenvectors and/or one or more approximate long-term eigenvalues of a long-term channel covariance matrix based on an approximation of the long-term channel covariance matrix, and transmitting the one or more approximate long-term eigenvectors and/or the one or more approximate long-term eigenvalues to the distributed unit of the distributed access node, the previous semi-compressed long-term channel covariance matrix being maintained in at least one memory, and the approximation of the long-term channel covariance matrix being based on the updated semi-compressed long-term channel covariance matrix and the compression matrix.

According to a third aspect, there is provided a non-transitory computer readable medium comprising program instructions that, when executed by an apparatus, cause the apparatus to perform at least the following:

obtaining a plurality of channel matrices corresponding to a plurality of frequencies;

selecting a compression matrix for reducing a size of the plurality of channel matrices according to a compression matrix selection scheme;

calculating, based on the plurality of channel matrices and the compression matrix, a plurality of compressed channel matrices;

calculating, based on the plurality of channel matrices and the plurality of compressed channel matrices, a semi-compressed short-term channel covariance matrix; and

performing at least one of:

- transmitting the semi-compressed short-term channel covariance matrix and the compression matrix to a distributed unit of a distributed access node;
- calculating one or more approximate short-term eigenvectors and/or one or more approximate short-term eigenvalues of a short-term channel covariance matrix based on an approximation of the short-term channel covariance matrix and transmitting the one or more approximate short-term eigenvectors and/or the one or more approximate short-term eigenvalues to the distributed unit of the distributed access node, wherein the approximation of the short-term channel covariance matrix is based on the semi-compressed short-term channel covariance matrix and the compression matrix; or
- calculating an updated semi-compressed long-term channel covariance matrix based at least on a previous semi-compressed long-term channel covariance matrix and the semi-compressed short-term channel covariance matrix, calculating one or more approximate long-term eigenvectors and/or one or more approximate long-term eigenvalues of a long-term channel covariance matrix based on an approximation of the long-term channel covariance matrix, and transmitting the one or more approximate long-term eigenvectors and/or the one or more approximate long-term eigenvalues to the distributed unit of the distributed access node, the previous semi-compressed long-term channel covariance matrix being maintained in at least one memory, and the approximation of the long-term channel covariance matrix being based on the updated semi-compressed long-term channel covariance matrix and the compression matrix.

According to a fourth aspect, there is provided an apparatus comprising:

at least one processor; and
at least one memory storing instructions that, when executed by the at least one processor, cause the apparatus at least to perform:

receiving, from a radio unit of a distributed access node, a compression matrix for reducing a size of a plurality of channel matrices corresponding to a plurality of frequencies and a semi-compressed short-term channel covariance matrix formed based on the plurality of channel matrices and the compression matrix;
performing at least one of:

- calculating one or more approximate short-term eigenvectors and/or one or more approximate short-term eigenvalues of a short-term channel covariance matrix based on an approximation of the short-term channel covariance matrix, wherein the approximation of the short-term channel covariance matrix is based on the semi-compressed short-term channel covariance matrix and the compression matrix, or
- calculating an updated semi-compressed long-term channel covariance matrix based at least on a previous semi-compressed long-term channel covariance matrix and the semi-compressed short-term channel covariance matrix and calculating one or more approximate long-term eigenvectors and/or one or more approximate long-term eigenvalues of a long-term channel covariance matrix based on an approximation of the long-term channel covariance matrix, wherein the previous semi-compressed long-term channel covariance matrix is maintained in the at least one memory or in at least one external memory accessible by the apparatus and the approximation of the long-term channel covariance matrix is based on the updated semi-compressed long-term channel covariance matrix and the compression matrix; and

performing scheduling and/or beamforming based on the one or more approximate short-term eigenvectors and/or the one or more approximate short-term eigenvalues and/or the one or more approximate long-term eigenvectors and/or the one or more approximate long-term eigenvalues.

According to a fifth aspect, there is a method comprising:

receiving, from a radio unit of a distributed access node, a compression matrix for reducing a size of a plurality of channel matrices corresponding to a plurality of frequencies and a semi-compressed short-term channel covariance matrix formed based on the plurality of channel matrices and the compression matrix;
performing at least one of:

- calculating one or more approximate short-term eigenvectors and/or one or more approximate short-term eigenvalues of a short-term channel covariance matrix based on an approximation of the short-term channel covariance matrix, wherein the approximation of the short-term channel covariance matrix is based on the semi-compressed short-term channel covariance matrix and the compression matrix, or
- calculating an updated semi-compressed long-term channel covariance matrix based at least on a previous semi-compressed long-term channel covariance matrix and the semi-compressed short-term channel covariance matrix and calculating one or more approximate long-term eigenvectors and/or one or more approximate long-term eigenvalues of a long-term channel covariance matrix based on an approximation of the long-term channel covariance matrix, wherein the previous semi-compressed long-term channel covariance matrix is maintained in at least one memory and the approximation of the long-term channel covariance matrix is based on the updated semi-compressed long-term channel covariance matrix and the compression matrix; and

performing scheduling and/or beamforming based on the one or more approximate short-term eigenvectors and/or the one or more approximate short-term eigenvalues and/or the one or more approximate long-term eigenvectors and/or the one or more approximate long-term eigenvalues.

According to a sixth aspect, there is provided a non-transitory computer readable medium comprising program instructions that, when executed by an apparatus, cause the apparatus to perform at least the following:

receiving, from a radio unit of a distributed access node, a compression matrix for reducing a size of a plurality of channel matrices corresponding to a plurality of frequencies and a semi-compressed short-term channel covariance matrix formed based on the plurality of channel matrices and the compression matrix;
performing at least one of:

- calculating one or more approximate short-term eigenvectors and/or one or more approximate short-term eigenvalues of a short-term channel covariance matrix based on an approximation of the short-term channel covariance matrix, wherein the approximation of the short-term channel covariance matrix is based on the semi-compressed short-term channel covariance matrix and the compression matrix, or

- calculating an updated semi-compressed long-term channel covariance matrix based at least on a previous semi-compressed long-term channel covariance matrix and the semi-compressed short-term channel covariance matrix and calculating one or more approximate long-term eigenvectors and/or one or more approximate long-term eigenvalues of a long-term channel covariance matrix based on an approximation of the long-term channel covariance matrix, wherein the previous semi-compressed long-term channel covariance matrix is maintained in at least one memory and the approximation of the long-term channel covariance matrix is based on the updated semi-compressed long-term channel covariance matrix and the compression matrix; and

performing scheduling and/or beamforming based on the one or more approximate short-term eigenvectors and/or the one or more approximate short-term eigenvalues and/or the one or more approximate long-term eigenvectors and/or the one or more approximate long-term eigenvalues.

According to a seventh aspect, there is provided an apparatus comprising:

at least one processor; and
at least one memory storing instructions that, when executed by the at least one processor, cause the apparatus at least to perform:

receiving, from a radio unit of a distributed access node, one or more approximate short-term eigenvectors and one or more approximate short-term eigenvalues of a short-term channel covariance matrix;
performing either:

- selecting a compression matrix according to a compression matrix selection scheme,
- calculating an updated semi-compressed long-term channel covariance matrix based at least on the compression matrix, a previous semi-compressed long-term channel covariance matrix, the one or more approximate short-term eigenvectors and the one or more approximate short-term eigenvalues, the previous semi-compressed long-term channel covariance matrix being maintained in the at least one memory or in at least one external memory accessible by the apparatus, and
- calculating one or more approximate long-term eigenvectors and/or one or more approximate long-term eigenvalues of a long-term channel covariance matrix based on an approximation of the long-term channel covariance matrix, wherein the approximation of the long-term channel covariance matrix is based on the updated semi-compressed long-term channel covariance matrix and the compression matrix, or
- calculating one or more approximate long-term eigenvectors and/or one or more approximate long-term eigenvalues of a long-term channel covariance matrix by applying a stochastic power iteration scheme taking as inputs the one or more approximate short-term eigenvectors and/or the one or more approximate short-term eigenvalues of the short-term channel covariance matrix as well as one or more previous approximate long-term eigenvectors and/or one or more previous approximate long-term eigenvalues of a previous long-term channel covariance matrix, the one or more previous approximate long-term eigenvectors and/or one or more previous approximate long-term eigenvalues being maintained in the at least one memory or in at least one external memory accessible by the apparatus; and

performing scheduling and/or beamforming based on the one or more approximate long-term eigenvectors and/or the one or more approximate long-term eigenvalues.

According to an eighth aspect, there is a method comprising:

receiving, from a radio unit of a distributed access node, one or more approximate short-term eigenvectors and one or more approximate short-term eigenvalues of a short-term channel covariance matrix;
performing either:

- selecting a compression matrix according to a compression matrix selection scheme,
- calculating an updated semi-compressed long-term channel covariance matrix based at least on the compression matrix, a previous semi-compressed long-term channel covariance matrix, the one or more approximate short-term eigenvectors and the one or more approximate short-term eigenvalues, the previous semi-compressed long-term channel covariance matrix being maintained in at least one memory, and

- calculating one or more approximate long-term eigenvectors and/or one or more approximate long-term eigenvalues of a long-term channel covariance matrix based on an approximation of the long-term channel covariance matrix, wherein the approximation of the long-term channel covariance matrix is based on the updated semi-compressed long-term channel covariance matrix and the compression matrix, or
- calculating one or more approximate long-term eigenvectors and/or one or more approximate long-term eigenvalues of a long-term channel covariance matrix by applying a stochastic power iteration scheme taking as inputs the one or more approximate short-term eigenvectors and/or the one or more approximate short-term eigenvalues of the short-term channel covariance matrix as well as one or more previous approximate long-term eigenvectors and/or one or more previous approximate long-term eigenvalues of a previous long-term channel covariance matrix, the one or more previous approximate long-term eigenvectors and/or the one or more previous approximate long-term eigenvalues being maintained in at least one memory; and

performing scheduling and/or beamforming based on the one or more approximate long-term eigenvectors and/or the one or more approximate long-term eigenvalues.

According to a ninth aspect, there is provided a non-transitory computer readable medium comprising program instructions that, when executed by an apparatus, cause the apparatus to perform at least the following:

receiving, from a radio unit of a distributed access node, one or more approximate short-term eigenvectors and one or more approximate short-term eigenvalues of a short-term channel covariance matrix;
performing either:

- selecting a compression matrix according to a compression matrix selection scheme,
- calculating an updated semi-compressed long-term channel covariance matrix based at least on the compression matrix, a previous semi-compressed long-term channel covariance matrix, the one or more approximate short-term eigenvectors and the one or more approximate short-term eigenvalues, the previous semi-compressed long-term channel covariance matrix being maintained in at least one memory, and
- calculating one or more approximate long-term eigenvectors and/or one or more approximate long-term eigenvalues of a long-term channel covariance matrix based on an approximation of the long-term channel covariance matrix, wherein the approximation of the long-term channel covariance matrix is based on the updated semi-compressed long-term channel covariance matrix and the compression matrix, or
- calculating one or more approximate long-term eigenvectors and/or one or more approximate long-term eigenvalues of a long-term channel covariance matrix by applying a stochastic power iteration scheme taking as inputs the one or more approximate short-term eigenvectors and/or the one or more approximate short-term eigenvalues of the short-term channel covariance matrix as well as one or more previous approximate long-term eigenvectors and/or one or more previous approximate long-term eigenvalues of a previous long-term channel covariance matrix, the one or more previous approximate long-term eigenvectors and/or the one or more previous approximate long-term eigenvalues being maintained in at least one memory; and
performing scheduling and/or beamforming based on the one or more approximate long-term eigenvectors and/or the one or more approximate long-term eigenvalues.

According to a tenth aspect, there is provided an apparatus comprising:

at least one processor; and
at least one memory storing instructions that, when executed by the at least one processor, cause the apparatus at least to perform:

obtaining a plurality of channel matrices corresponding to a plurality of frequencies;
selecting a compression matrix for reducing a size of the plurality of channel matrices according to a compression matrix selection scheme;
calculating, based on the plurality of channel matrices and the compression matrix, a plurality of compressed channel matrices;
calculating, based on the plurality of channel matrices and the plurality of compressed channel matrices, a semi-compressed short-term channel covariance matrix;
calculating one or more approximate short-term eigenvectors and/or one or more approximate short-term eigenvalues of a short-term channel covariance matrix based on an approximation of the short-term channel covariance matrix, wherein the approximation of the short-term channel covariance matrix is based on the semi-compressed short-term channel covariance matrix and the compression matrix; and

performing scheduling and/or beamforming based on the one or more short-term eigenvectors and/or the one or more short-term eigenvalues.

According to an eleventh aspect, there is a method comprising:

obtaining a plurality of channel matrices corresponding to a plurality of frequencies;
selecting a compression matrix for reducing a size of the plurality of channel matrices according to a compression matrix selection scheme;
calculating, based on the plurality of channel matrices and the compression matrix, a plurality of compressed channel matrices;
calculating, based on the plurality of channel matrices and the plurality of compressed channel matrices, a semi-compressed short-term channel covariance matrix;
calculating one or more approximate short-term eigenvectors and/or one or more approximate short-term eigenvalues of a short-term channel covariance matrix based on an approximation of the short-term channel covariance matrix, wherein the approximation of the short-term channel covariance matrix is based on the semi-compressed short-term channel covariance matrix and the compression matrix; and
performing scheduling and/or beamforming based on the one or more short-term eigenvectors and/or the one or more short-term eigenvalues.

According to a twelfth aspect, there is provided a non-transitory computer readable medium comprising program instructions that, when executed by an apparatus, cause the apparatus to perform at least the following:

obtaining a plurality of channel matrices corresponding to a plurality of frequencies;
selecting a compression matrix for reducing a size of the plurality of channel matrices according to a compression matrix selection scheme;
calculating, based on the plurality of channel matrices and the compression matrix, a plurality of compressed channel matrices;
calculating, based on the plurality of channel matrices and the plurality of compressed channel matrices, a semi-compressed short-term channel covariance matrix;
calculating one or more approximate short-term eigenvectors and/or one or more approximate short-term eigenvalues of a short-term channel covariance matrix based on an approximation of the short-term channel covariance matrix, wherein the approximation of the short-term channel covariance matrix is based on the semi-compressed short-term channel covariance matrix and the compression matrix; and
performing scheduling and/or beamforming based on the one or more short-term eigenvectors and/or the one or more short-term eigenvalues.

One or more examples of implementations are set forth in more detail in the accompanying drawings and the description below. Other features will be apparent from the description and drawings, and from the claims.

BRIEF DESCRIPTION OF THE DRAWINGS

FIG. 1 illustrates a system to which some embodiments may be applied;

FIG. 2 illustrates signaling between a radio unit and a distributed unit for calculating approximate short-term eigenvectors and/or eigenvalues of a short-term channel covariance matrix according to embodiments;

FIG. 3 illustrates a detailed implementation of block 205 of FIG. 2 according to some embodiments;

FIGs. 4 to 8 illustrate alternative signaling between a radio unit and a distributed unit for calculating approximate short-term eigenvectors and/or eigenvalues of a short-term channel covariance matrix according to embodiments; and

FIG. 9 illustrates an apparatus according to some embodiments.

DETAILED DESCRIPTION OF SOME EMBODIMENTS

The following embodiments are only presented as examples. Although the specification may refer to "an", "one", or "some" embodiment(s) and/or example(s) in several locations of the text, this does not necessarily mean that each reference is made to the same embodiment(s) or example(s), or that a particular feature only applies to a single embodiment and/or example. Single features of different embodiments and/or examples may also be combined to provide other embodiments and/or examples.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In the Figures to be discussed below, dashed lines are used for indicating optional features.

In the following, the following mathematical notational conventions are employed. Matrices are denoted using bold non-italic capital letters. Vectors are denoted using bold italic letters. Scalars are denoted using non-bold italic letters. Superscript 'H' is used for denoting conjugate transpose operation.

To facilitate the following discussion of embodiments, a general discussion of the so-called Nyström approximation is provided in the following. The Nyström approximation is a mathematical technique which enables acquiring a low-rank approximation of a covariance matrix $\mathbf{C}$ based on a compressed version of the covariance matrix. Namely, the compressed version of the covariance matrix has the form $\mathbf{Y} = \mathbf{C}\Omega$, where $\Omega$ is a compression matrix (sometimes called a test matrix, a sampling matrix or a measurement matrix), $\mathbf{C}$ has the size of $N \times N$, and $\Omega$ has the size of $N \times q$. The compression matrix $\Omega$ gets its name from the fact that typically $q < N$ and, thus, the matrix $\mathbf{Y}$ is smaller than the matrix $\mathbf{C}$. The exact form of the compression matrix may be selected in multiple different ways (e.g., randomly, based on $\mathbf{C}$ or using a pre-defined rule). Given the compressed covariance matrix $\mathbf{Y}$ and the compression matrix $\Omega$, the best estimate $\hat{\mathbf{C}}$ for the (full) channel covariance matrix, according to some criteria, is the Nystrom approximation:

$$\hat{\mathbf{C}} = \mathbf{Y}(\mathbf{\Omega}^{\mathrm{H}}\mathbf{Y})^{-1}\mathbf{Y}^{\mathrm{H}} \qquad (1)$$

In linear algebra, a matrix of the form $\mathbf{C} = \mathbf{XX}^{\mathrm{H}}$ is called a Gramian matrix (or equally a Gram matrix). In the following, the matrix $\mathbf{X}$ is called a constituent matrix (or a factor matrix) of a Gramian matrix $\mathbf{C}$. A singular value decomposition (SVD) of the matrix $\mathbf{X}$ has the form $\mathbf{X} = \mathbf{U}\Sigma\mathbf{V}^{\mathrm{H}}$, where $\mathbf{U}$ is a complex unitary matrix comprising, as its columns, left-singular vectors, $\Sigma$ is a rectangular diagonal matrix with non-negative real numbers (i.e., singular values) on the diagonal and $\mathbf{V}$ is a complex unitary matrix comprising, as its columns, right-singular vectors. One fundamental property of Gramian matrices is that eigenvectors of a Gramian matrix C are equal to left-singular vectors of the matrix $\mathbf{X}$ (i.e., rows of $\mathbf{U}$). Thus, if $\mathbf{X}$ has the size $N \times q$ with $q < N$, the left-singular vectors of $\mathbf{X}$ (i.e., eigenvectors of $\mathbf{C}$) can be obtained using an SVD of $\mathbf{X}$, instead a size $N$ EVD of $\mathbf{C}$ directly. Applying this idea to the Nystrom approximation of (1), it can be first observed that the equation (1) may be written equally as $\hat{\mathbf{C}} = \mathbf{Y}(\mathbf{\Omega}^{\mathrm{H}}\mathbf{Y})^{-\frac{1}{2}}\left(\mathbf{Y}(\mathbf{\Omega}^{\mathrm{H}}\mathbf{Y})^{-\frac{1}{2}}\right)^{\mathrm{H}}$, where $\mathbf{Y}(\mathbf{\Omega}^{\mathrm{H}}\mathbf{Y})^{-\frac{1}{2}} = \mathbf{X}$ is a constituent matrix of the Gramian matrix C. Consequently, the eigenvectors of $\hat{\mathbf{C}}$ can be calculated as the left singular vectors of the matrix $\mathbf{X} = \mathbf{Y}(\mathbf{\Omega}^{\mathrm{H}}\mathbf{Y})^{-\frac{1}{2}}$. As will be described below in detail, application of this fundamental property of covariance matrices when applied to channel covariance matrices of a MIMO system forms a key part of embodiments.

As used in the following, the term "short-term" (e.g., as used in expressions such as "short-term channel properties", "short-term channel covariance matrix", "short-term eigenvectors" and "short-term eigenvalues") may be defined to refer to a single time instance or a (short) time range associated with substantially stable channel conditions. Said short time range may be a pre-defined time range known to correspond, in most cases (that is, outside of extraordinary circumstances), to stable channel conditions. Typically, said (short) time range may cover a single transmission or a few (e.g., 2, 3 or 4) consecutive transmissions. Here, said channel conditions may correspond to, e.g., fading, interference, and/or noise conditions. Thus, "substantially stable channel conditions" may mean that channel conditions satisfy one or more pre-defined criteria (e.g., a change in any of the listed quantities may be within respective pre-defined limits). A short-term channel covariance may be sometimes called an instantaneous channel covariance. On the other hand, the term "long-term" (e.g., as used in expressions such as "long-term channel properties", "long-term channel covariance matrix", "long-term eigenvectors" and "long-term eigenvalues) may be defined to refer to a (long) time range (i.e., longer than "short-term" time range) during which a (substantial) change in the channel conditions may occur. Long-term parameters may be derivable based on the (corresponding) short-term parameters measured at a plurality of consecutive time instances. The terms "short-term" and "long-term" may be equally called first-stage and second-stage, respectively, as long-term quantities (e.g., long-term channel covariance matrix) are typically derived (or at least derivable) based at least on corresponding short-term quantities.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs), Internet Protocol multimedia subsystems (IMS), rebel SIM (R-SIM) for code division multiple access (CDMA) technologies such as 1x and 1x evolution data optimized (1xEV-DO), global system for mobile communications (GSM), open radio access network (O-RAN) or any combination thereof.

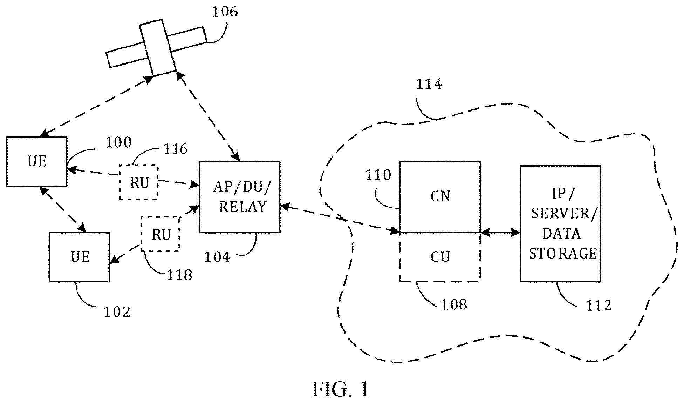

FIG. 1 depicts examples of simplified system architectures only showing some elements and functional entities, all being logical units, whose implementation may differ from what is shown. The connections shown in FIG. 1 are logical connections; the actual physical connections may be different. It is apparent to a person skilled in the art that the system typically comprises also other functions and structures than those shown in FIG. 1.

The embodiments are not, however, restricted to the system given as an example but a person skilled in the art may apply the solution to other communication systems provided with necessary properties.

The example of FIG. 1 shows a part of an exemplifying radio access network.

A communications system typically comprises more than one (e/g)NodeB 104 in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device 100, 102 (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station. The user equipment may comprise a mobile equipment and at least one universal integrated circuit card (UICC).

The user device 100, 102 typically refers to a portable computing device that includes wireless mobile communication devices operating with or without a subscriber identity (or identification) module (SIM) or UICC, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. Here, the SIM may be a physical SIM which may be removable by a user or an embedded SIM (eSIM) embedded directly into the user device 100, 102 (and thus not being removable by a user). It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Thus, the user devices may not enable direct user interaction or may enable only limited user interaction (e.g., during setup). The user device (or in some embodiments a layer 3 relay node) is configured to perform one or more of user equipment functionalities. The user device may also be called a terminal device, a subscriber unit, mobile station, remote terminal, access terminal, user terminal or user equipment (UE) just to mention but a few names or apparatuses. Each user device 100, 102 may comprise one or more antennas.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using MIMO antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

The RAN may employ, in some embodiments, a distributed access node architecture. Thus, the RAN may comprise, in some embodiments, at least one distributed access node comprising a centralized (or central) unit (CU) 108, one or more distributed units 104 communicatively connected to the centralized unit 108 and one or more (remote) radio heads or units (RRHs, RUs or RRUs) 116, 118, each of which is communicatively connected to at least one of the one or more distributed units (DUs) 104. The one or more radio units 116, 118 and the distributed unit 104 may be specifically connected by a front-haul interface. The radio unit 116, 118 may comprise analog circuitry, digital-to-analog and analog-to-digital conversion circuitry, and circuitry for performing some of layer-1 (L1) processing of the distributed access node. The radio unit 116, 118 may comprise or be directly connected to one or more antennas of the distributed access node. The distributed unit may comprise circuitry for performing some L1 processing of the distributed access node (e.g., beamforming weight calculation) as well as circuitry for performing layer-2 (L2) processing (e.g., scheduling and resource allocation). The centralized unit 108 may comprise circuitry for performing higher-layer processing functions of the distributed access node, including layer-3 (L3) processing (e.g., Radio Resource Control, mobility management, and connection establishment), and optionally some non-real-time L2 processing. The centralized unit 108 typically manages and coordinates multiple distributed units, handling tasks such as network management, policy enforcement, and interfacing with the core network. It may be located in a central data center or cloud environment 114, enabling efficient centralized control and resource allocation across the network.

Edge cloud may be brought into the RAN by utilizing network function virtualization (NVF) and software defined networking (SDN). Using edge cloud may mean access node operations to be carried out, at least partly, in a server, host or node operationally coupled to the RU 116, 118 or base station comprising radio parts. It is also possible that node operations will be distributed among a plurality of servers, nodes or hosts. Application of cloudRAN architecture enables RAN real time functions being carried out at the RAN side (in the DU 104) and non-real time functions being carried out in a centralized manner (in the CU 108).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)nodeBs), a home node B gateway, or HNB-GW (not shown in FIG. 1). A HNB Gateway (HNB-GW), which is typically installed within an operator's network may aggregate traffic from a large number of HNBs back to a core network.

6G architecture is targeted to enable easy integration of everything, such as a network of networks, joint communication and sensing, non-terrestrial networks and terrestrial communication. 6G systems are envisioned to encompass machine learning algorithms as well as local and distributed computing capabilities, where virtualized network functions can be distributed over core and edge computing resources. Far edge computing, where computing resources are pushed to the very edge of the network, will be part of the distributed computing environment, for example in "zero-delay" scenarios. Some 5G systems may also employ such capabilities. More generally, the actual (radio) communication system is envisaged to be comprised of one or more computer programs executed within a programmable infrastructure, such as general-purpose computing entities (servers, processors, and like).

6G networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication, distributed ledgers and blockchain technologies. Key features of 6G will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds

As mentioned above, the system of FIG. 1 may support MIMO or massive or extreme MIMO. In a closed-loop time division duplex (TDD)-mode massive (or extreme) MIMO system, an access node estimates uplink wideband channel using obtained channel state information (CSI) and designs beamforming/precoding for downlink (DL) data transmission based on the estimated radio channels (the uplink channel estimation being valid also for the downlink channel due to channel reciprocity in TDD). The CSI may be obtained based on measurements of reference signals for channel estimation. Said reference signals for channel estimation may comprise, e.g., sounding reference signals (SRSs) and/or demodulation reference signal (DMRSs). Accordingly, the estimated radio channels may be equally called SRS channels or DMRS channels (depending on the type of reference signals used). In practice, the estimated radio channel in a MIMO system is defined typically using channel matrices which describes the relationships between signals transmitted using a plurality of transmit antennas and signals received using a plurality of receive antennas. Moreover, the estimation of the uplink wideband channel may comprise specifically estimating eigenvectors (and/or eigenvalues) of the short-term and/or long-term channel covariance matrix of the uplink wideband channel. The DL performance of massive (or extreme) MIMO system is, thus, mainly influenced by radio channel estimation accuracy and used beamforming schemes.

Specifically in a distributed access node architecture, the radio unit of the distributed access node has typically access to estimates of instantaneous channel matrices $\{\mathbf{G}_{k,t}\}$ at various times $t$ and on various frequency resources $k$, with a given terminal device. To enable high-rate reliable communication with that terminal device, the distributed unit of the distributed access node should obtain accurate estimates of the eigenvectors of the short-term channel covariance and/or the long-term channel covariance matrix for said terminal device.

The baseline approach to exploiting CSI in MIMO applications involves two basic steps: 1) covariance estimation and 2) eigenvalue decomposition (EVD, or equally eigendecomposition).

In the first step, a short-term channel covariance matrix $\mathbf{C}_{ST,t}$ (i.e., a short-term covariance estimate) may be calculated by averaging outer products of channel estimates (i.e., instantaneous channel matrices) over frequency, as

$$\mathbf{C}_{\mathrm{ST},t} = \frac{1}{K} \sum_{k=1}^{K} \mathbf{G}_{k,t}^{\mathrm{H}} \mathbf{G}_{k,t}, \qquad (2)$$

wherein t is a time index (associated with a certain time instance or short-term time range), $k$ is a frequency index, $K$ is the total number of frequencies associated with the radio channel and $\mathbf{G}_{k,t}$ is a channel matrix for the frequency $k$ at time $t$ having size $N_{\mathrm{RX}} \times N_{\mathrm{TX}}$. Moreover, a long-term channel covariance matrix $\mathbf{C}_{\mathrm{LT},t}$ (i.e., a long-term covariance estimate) may be calculated by averaging short-term covariance matrices over time according to

$$\mathbf{C}_{\mathrm{LT},t} = (1 - \alpha)\mathbf{C}_{\mathrm{LT},t-1} + \alpha\mathbf{C}_{\mathrm{ST},t} \qquad (3)$$

wherein $\alpha$ is a positive real-valued weighting factor smaller than 1. For a channel with $N_{\mathrm{RX}}$ terminal device antennas (i.e., $N_{\mathrm{RX}}$ receiver antennas) and $N_{\mathrm{TX}}$ access node antennas (i.e., $N_{\mathrm{TX}}$ transmitter antennas), the short-term and long-term covariance matrices of (1) & (2) are of size $N_{\mathrm{TX}} \times N_{\mathrm{TX}}$, where $N_{\mathrm{RX}}$ and $N_{\mathrm{TX}}$ are positive integers larger than one (or larger than zero and one, respectively, in the case of SIMO (single input, multiple output).

The second step (i.e., the EVD step) involves taking $\mathbf{C}_{\mathrm{ST},t}$ and/or $\mathbf{C}_{\mathrm{LT},t}$ as input, calculating $L$ most significant eigenvectors (i.e., $L$ eigenvectors corresponding to $L$ largest eigenvalues), and forming, based on said $L$ most significant eigenvectors, a short-term eigenvector matrix $\mathbf{V}_{\mathrm{ST},t}$ and/or a long-term eigenvector matrix $\mathbf{V}_{\mathrm{LT},t}$, respectively. The $L$ most significant eigenvectors represent the $L$ directions in which the radio channel exhibits the strongest signal power. In general, an eigenvector matrix of a given matrix is defined simply as a matrix comprising, typically as rows, the eigenvectors (or at least some of them) of said matrix. Typically, $L$ is (much) smaller than $N_{\mathrm{TX}}$. These eigenvectors and possibly also the associated eigenvalues may be used subsequently for layer-2 processing including, e.g., scheduling and/or beamforming weight calculation.

The computational complexity of the covariance estimation as described above scales with $KN_{\mathrm{RX}}N_{\mathrm{TX}}^2$, while the computational complexity of the EVD typically scales with $LN_{\mathrm{TX}}^2$. The quadratic scaling with $N_{\mathrm{TX}}$ in both steps is problematic, especially considering massive (or extreme) MIMO where the number of access node antennas $N_{\mathrm{TX}}$ may be, e.g., 64, 128 or 256 or even higher. Therefore, for efficient massive MIMO operation, it would be highly beneficial if the computational complexity and especially the extent to which it scales with $N_{\mathrm{TX}}$ could be reduced without substantially sacrificing accuracy. Ideally, linear scaling with $N_{\mathrm{TX}}$ should be achieved for enabling use of a high number of access node antennas.

The embodiments are based on the idea of leveraging aspects of the Nyström approximation to solve the aforementioned technical problem. One of the key aspects of at least some of the embodiments is to avoid the computationally costly operation of calculating the entire covariance matrix in the radio unit, and, instead, calculate a compressed covariance matrix. Another key aspect of at least some of the embodiments is to avoid large scale EVD by, instead, using a Nyström EVD (that is, indirect EVD calculation based on a Nyström approximation of a channel covariance matrix). Another key aspect of at least some of the embodiments is to carefully choose what information to send over the front haul, and which computations to do in radio unit and in distributed unit. Another key aspect of at least some of the embodiments is to "bootstrap" previous computations to maximize accuracy and efficiency of compression.

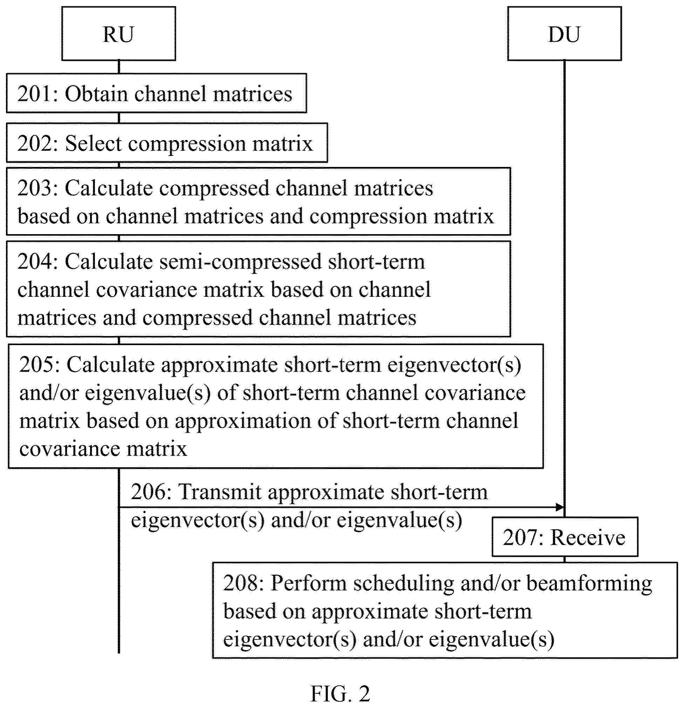

FIG. 2 illustrates signaling between a radio unit of a distributed access node and a distributed unit of the distributed access node for estimating eigenvectors and/or eigenvalues of a short-term channel covariance matrix of a radio channel according to embodiments. The radio unit of FIG. 2 may be a radio unit 116, 118 of FIG. 1 and/or the distributed unit of FIG. 2 may be a distributed unit 104 of FIG. 1.

Referring to FIG. 2, the radio unit initially obtains, in block 201, a plurality of channel matrices corresponding to a plurality of frequencies (or equally a plurality of frequency resources). The plurality of channel matrices may correspond to a (short) time range associated with substantially stable channel conditions or (substantially) to a single time instance. In other words, the plurality of channel matrices are such that they may be used for evaluating short-term properties of the radio channel. The plurality of channel matrices $\mathbf{G}_{k,t}$ may correspond, respectively, to the plurality of frequencies (i.e., a plurality of values for index k). The plurality of channel matrices may be associated with a (single) terminal device. In other words, the plurality of channel matrices may describe the short-term wideband radio channel between the distributed access node and the terminal device. Each of the plurality of channel matrices $\mathbf{G}_{k,t}$ may be a matrix of size $N_{\mathrm{RX}} \times N_{\mathrm{TX}}$, where $N_{\mathrm{RX}}$ and $N_{\mathrm{TX}}$ are equal to the number of receiver and transmitter antennas or antenna ports (i.e., numbers of antennas/antenna ports at the terminal device and at the radio unit). The number of the plurality of frequencies may be equal to K.

The obtaining of the plurality of channel matrices in block 201 may comprise generating or forming the plurality of channel matrices based on results of radio measurements performed (and subsequently reported to the radio unit) by the terminal device. The radio measurements may be measurements of reference signals (e.g., SRSs and/or DMRSs) transmitted by the distributed access node. Alternatively, the obtaining of the plurality of channel matrices in block 201 may comprise receiving the plurality of channel matrices from another device such as from the distributed unit.

The radio unit selects, in block 202, a compression matrix for reducing a size of the plurality of channel matrices according to a (pre-defined) compression matrix selection scheme. The compression matrix selected by the radio unit may be equally called, here and in the following, a short-term compression matrix (to differentiate it from a long-term compression matrix calculated in some further embodiments to be discussed below). Specifically, the compression matrix is a compression matrix of a Nyström approximation. As will be described in connection with block 203 in detail, the compression matrix enables compressing one dimension of a particular matrix (here, each of the plurality of channel matrices) by carrying out a matrix product of the matrix to be compressed and the compression matrix. The size of the compression matrix is $N_{TX} \times q$, where $q$ corresponds to the compressed dimension of the compression matrix (that is, the dimension which is compressed relative to the matrix to be compressed). Thus, the parameter q is an integer smaller than $N_{TX}$.

In some embodiments, the compression matrix may be a submatrix of a permutation matrix. A permutation matrix is a square binary matrix used to rearrange or permute the elements of a vector or the rows/columns of another matrix. It is composed of ones and zeros, where each row and each column has exactly one entry of 1, with all other entries being 0. The compression matrix may comprise (pre-defined or randomly selected) columns of the permutation matrix (being, e.g., an identity matrix). The selection of the one or more columns may be pre-defined or random. The size of the permutation matrix may be, e.g., $N_{TX} \times N_{TX}$. The number of selected columns may be pre-defined.

In some embodiments, the compression matrix may be defined to consist only of values 1 and -1.

A plurality of different compression matrix selection schemes or methods may be used for selecting the compression matrix in block 202. In some embodiments, the selection of the compression matrix according to the compression matrix selection scheme in block 202 may comprise one of:

1.1) selecting a pre-defined compression matrix (stored, e.g., in at least one memory of the radio unit or at least one external memory accessible by the radio unit),

1.2) selecting each column of the compression matrix from columns of an identity matrix (having, e.g., size $N_{TX} \times N_{TX}$) (or other permutation matrix) randomly or according to a pre-defined rule, or

1.3) selecting each element of the compression matrix randomly based on a pre-defined probability distribution.

In option 1.1), the pre-defined compression matrix may not depend on time. In option 1.2), the pre-defined rule may, for example, define that first $q$ columns, last $q$ columns or, more generally, columns $p, p+1,..., p+q-1$ of the identity matrix (or other permutation matrix) should be selected, where $p$ is a positive integer smaller than or equal to $N_{RX} - q + 1$. In other embodiments, the pre-defined rule may define a set of at least partially non-consecutive columns. In other embodiments, the pre-defined rule may correspond to a greedy algorithm configured to minimize a trace of a residual error between the covariance channel matrix and a Nystrom approximation of the covariance channel matrix. In option 1.3), the pre-defined probability distribution may be, e.g., a binary, uniform, or normal distribution.

In some embodiments, the selection of the compression matrix according to the compression matrix selection scheme in block 202 may be carried out according to the bootstrapping principle (i.e., by sampling previously calculated data). Namely, the selection of the compression matrix according to the compression matrix selection scheme in block 202 may comprise determining the compression matrix based on all or some of previously calculated plurality of approximate short-term eigenvectors of a previous short-term channel covariance matrix. Said all or some of previously calculated plurality of approximate short-term eigenvectors of a previous short-term channel covariance matrix may be the most recent approximate short-term eigenvectors of a short-term channel covariance matrix available to the radio unit. Said some of previously calculated plurality of approximate short-term eigenvectors of a previous short-term channel covariance matrix may comprise, for example, at least $n$ most dominant previous eigenvectors, where $n$ is a pre-defined integer larger than zero. Here, it may be assumed that the previously calculated plurality of approximate short-term eigenvectors are maintained in at least one memory of the radio unit or in other at least one (external) memory accessible by the radio unit. The calculation of these previous approximate short-term eigenvectors and the short-term channel covariance matrix (corresponding to a previous time step t-1) may have been carried out in a similar manner as will be described in detail below for the "current" approximate short-term eigenvectors and the short-term channel covariance matrix.

The aforementioned (bootstrapping-based) determining of the compression matrix based on all or some of previously calculated plurality of approximate short-term eigenvectors of the previous short-term channel covariance matrix may comprise one of the following:

2.1) determining the compression matrix to be a matrix comprising said all or some of the previously calculated plurality of approximate short-term eigenvectors of the previous short-term channel covariance matrix (e.g., $\Omega_t = \hat{V}_{t-1}$ may apply, where $\hat{V}_{t-1}$ is an eigenvector matrix comprising the previously calculated plurality of approximate short-term eigenvectors); or

2.2) determining each element of the compression matrix to have a value defined based on a value of a corresponding element of a previous eigenvector matrix ($\hat{V}_{t-1}$) comprising the previously calculated plurality of approximate short-term eigenvectors; or

2.3) determining the compression matrix to be a matrix calculated as follows:

- determining a norm squared of each row of a previous eigenvector matrix ( $\hat{V}_{t-1}$ ) comprising the previously calculated plurality of approximate short-term eigenvectors as columns,

- identifying q row indices of the previous eigenvector matrix corresponding to q largest norm squared values, q being a positive integer, and

- selecting the compression matrix to comprise (or consist of) $q$ columns of an identity matrix (having, e.g., size $N_{TX} \times N_{TX}$), wherein the q columns have column indices matching said q row indices.

In an example of option 2.2), each element $\Omega_{t,n,m}$ of the compression matrix $\Omega_t$ may be selected, based on elements $\hat{V}_{t-1,n,m}$ of the previous eigenvector matrix $\hat{V}_{t-1}$, such that the following equations apply:

$$\mathrm{Re}\big(\Omega_{t,n,m}\big) = \mathrm{sgn}\left(\mathrm{Re}\big(\hat{V}_{t-1,n,m}\big)\right) \quad \text{and} \tag{4}$$

$$\mathrm{Im}\big(\Omega_{t,n,m}\big) = \mathrm{sgn}\left(\mathrm{Im}\big(\hat{V}_{t-1,n,m}\big)\right), \tag{5}$$

where 'Re' & 'Im' correspond to real and imaginary parts, 'sgn' is a signum function and $n$ & $m$ are column and row indices of the previous eigenvector matrix $\hat{V}_{t-1}$.

Using bootstrapping in the compression matrix selection enables calculation of eigenvector(s) and/or eigenvalue(s) which are very close to the true eigenvectors of the short-term channel covariance matrix due to channel coherence, as long as the change between $C_{ST,t-1}$ & $C_{ST,t}$ is sufficiently small due to channel coherence.

Advantageously, whenever the real and imaginary parts of elements of $\Omega_t$ consist of only values 1 and -1, the compressed channel matrices $\tilde{G}_{k,t}$ can be computed using only sums and sign changes, without multiplications

The radio unit calculates, in block 203, based on the plurality of channel matrices and the compression matrix, a plurality of compressed channel matrices. Namely, the radio unit may calculate a matrix product between each of the plurality of channel matrices and the compression matrix to obtain the plurality of compressed channel matrices. In other words, the radio unit may calculate a compressed channel matrix $\tilde{G}_{k,t}$ based on a channel matrix $G_{k,t}$ and the compression matrix $\Omega_t$ according to

$$\tilde{G}_{k,t} = G_{k,t}\Omega_t. \tag{6}$$

The calculation of (6) may be carried out separately for each of the plurality of channel matrices (i.e., for each $G_{k,t}$ with multiple different values of $k$). The size of the plurality of compressed channel matrices is equal to $N_{RX} \times q$.

In embodiments where the compression matrix consists of columns of a permutation matrix, the radio unit may calculate the matrix multiplication of (6) by simply selecting columns of $G_{k,t}$, as opposed to performing explicit matrix multiplication.

In embodiments where the real and imaginary parts of the compression matrix consist only of values 1 and -1, the radio unit may calculate the compressed channel matrices $\tilde{G}_{k,t}$ using only sums and sign changes, without multiplications.

The radio unit calculates, in block 204, based on the plurality of channel matrices and the plurality of compressed channel matrices, a semi-compressed short-term channel covariance matrix. The calculating of the semi-compressed short-term channel covariance matrix in block 204 may comprise calculating the semi-compressed short-term channel covariance matrix as an average (or specifically as an instantaneous average) of matrix products of conjugate transposes of the plurality of channel matrices and the corresponding plurality of compressed channel matrices. In other words, the radio unit may calculate the semi-compressed short-term channel covariance matrix $Y_t$ in block 204 according to

$$\mathbf{Y}_t = \frac{1}{K} \sum_{k=1}^{K} \mathbf{G}_{k,t}^{\mathrm{H}} \widetilde{\mathbf{G}}_{k,t} \, , \qquad\qquad (7)$$

where $\tilde{\mathbf{G}}_{k,t}$ is a compressed channel matrix for frequency $k$, $\mathbf{G}_{k,t}$ is a (non-compressed) channel matrix for frequency $k$ and $K$ is the number of the plurality of frequencies associated with the plurality of channel matrices. The semi-compressed short-term channel covariance matrix $\mathbf{Y}_t$ may have a size of $N_{\mathrm{TX}} \times q$.

The radio unit calculates, in block 205, one or more approximate short-term eigenvectors and/or one or more approximate short-term eigenvalues of a short-term channel covariance matrix based on an approximation of the short-term channel covariance matrix. Said approximation may be based on the semi-compressed short-term channel covariance matrix and the compression matrix. The approximation of the short-term channel covariance matrix may be, e.g., a Nyström approximation of the short-term channel covariance matrix. The radio unit may not necessarily calculate, in block 205, said approximation of the short-term channel covariance matrix in full but may, instead, only calculate a certain factor matrix of a matrix decomposition (e.g., Gramian decomposition) of the approximation of the short-term channel covariance matrix, as will be described below in detail for the Nyström approximation. The one or more approximate short-term eigenvalues may comprise at least one or more dominant (i.e., largest) approximate short-term eigenvalues. The one or more approximate short-term eigenvectors may comprise at least one or more dominant approximate short-term eigenvectors, that is, one or more approximate short-term eigenvectors corresponding to the one or more dominant (i.e., largest) approximate short-term eigenvalues. In some embodiments, the one or more approximate short-term eigenvectors may comprise a plurality of (dominant) approximate short-term eigenvectors (e.g., all of the approximate short-term eigenvectors) and/or the one or more approximate short-term eigenvalues may comprise a plurality of (dominant) approximate short-term eigenvalues (e.g., all of the approximate short-term eigenvalues). It is noted that, in some embodiments where the aforementioned compression matrix selection bootstrapping functionalities are to be employed, a plurality of approximate short-term eigenvectors and/or a plurality of approximate short-term eigenvalues may need to be calculated in block 205. In some embodiments, the radio unit may calculate at least the one or more short-term eigenvectors (or the plurality of short-term eigenvectors).

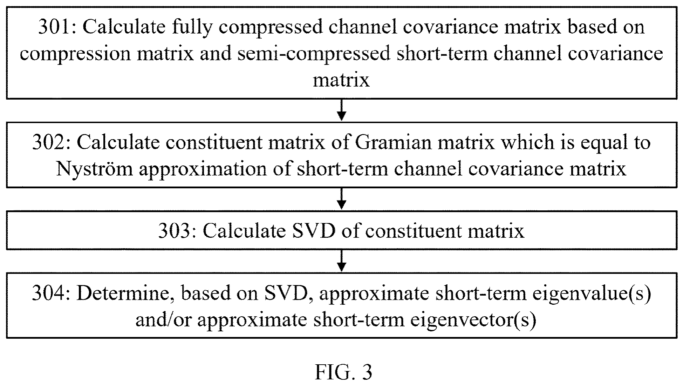

The calculating of the one or more approximate short-term eigenvectors and/or the one or more short-term eigenvalues of the short-term channel covariance matrix in block 205 may be based on a singular value decomposition (SVD) of a constituent matrix of a Gramian matrix, where the Gramian matrix is equal to a Nyström approximation of the short-term channel covariance matrix (which is defined based on the semi-compressed short-term channel covariance matrix and the compression matrix). In other words, the radio unit may calculate, in block 205, an SVD of a constituent matrix of a Gramian representation (or decomposition) of a Nyström approximation of the short-term channel covariance matrix and determine, also in block 205, the one or more approximate short-term eigenvectors and/or the one or more short-term eigenvalues of the short-term channel covariance matrix based on the SVD. Thus, instead of calculating the Nyström approximation of the short-term channel covariance matrix directly and carrying out EVD for said Nyström approximation, the plurality of approximate short-term eigenvectors and/or the plurality of approximate short-term eigenvalues of the short-term channel covariance matrix may be calculated indirectly based on fundamental properties of Gramian matrices and SVD. This provides the benefit of reduced computational complexity. This calculation is discussed in further detail in connection with FIG. 3.

In some embodiments, the radio unit may store the one or more approximate short-term eigenvectors and/or the one or more approximate short-term eigenvalues of the short-term channel covariance matrix to at least one memory of the radio unit or at least one (external) memory accessible by the radio unit. The one or more approximate short-term eigenvectors may be stored, for example, in the form of an eigenvector matrix. The one or more approximate short-term eigenvalues may be stored, for example, in the form of an eigenvalue vector or a diagonal eigenvalue matrix.

The radio unit transmits, in message 206, the one or more approximate short-term eigenvectors and/or the one or more short-term eigenvalues to the distributed unit. In some embodiments, at least the one or more approximate short-term eigenvectors may be transmitted.

The distributed unit receives, in block 207, the one or more approximate short-term eigenvectors and/or the one or more approximate short-term eigenvalues from the radio unit. Thereafter, the distributed unit uses, in block 208, the one or more approximate short-term eigenvectors and/or the one or more approximate short-term eigenvalues (or at least some of them) for scheduling and/or beamforming (e.g., beamforming weight calculation). In other words, the one or more approximate short-term eigenvectors and/or the one or more approximate short-term eigenvalues (or at least some of them) may be used as inputs of a scheduling and/or beamforming algorithm. In some embodiments, at least the one or more approximate short-term eigenvectors may be used in block 208. In some embodiments, at least the beamforming may be carried out in block 208.

In some embodiments, at least n most dominant approximate short-term eigenvectors and/or eigenvalues may be used for the scheduling and/or beamforming in block 208, where n is a (pre-defined) integer larger than zero.

FIG. 3 illustrates a detailed process for calculating one or more approximate short-term eigenvectors and/or one or more approximate short-term eigenvalues of a short-term channel covariance matrix based on a Nyström approximation of the short-term channel covariance matrix. Thus, the process of FIG. 3 provides one detailed implementation of block 205 of FIG. 2 (or equally any of the corresponding steps of any of the processes to be discussed below). The process of FIG. 3 may be carried out by a radio unit of a distributed access node such as any of the radio units 116, 118 of FIG. 1.

In FIG. 3, it is assumed that actions corresponding to blocks 201 to 204 have been carried out before the execution of the process of FIG. 3. Thus, both a compression matrix ($\Omega_t$) as well as a semi-compressed short-term channel covariance matrix ($\mathbf{Y}_t$) have been obtained or determined.

First, the radio unit calculates, in block 301, a fully compressed short-term channel covariance matrix based on the compression matrix and the semi-compressed short-term channel covariance matrix. Namely, the radio unit may calculate the fully compressed short-term channel covariance matrix covariance $\tilde{\mathbf{C}}_t$ according to

$$\tilde{\mathbf{C}}_t = \Omega_t^{\mathrm{H}} \mathbf{Y}_t. \qquad (8)$$

The fully compressed short-term channel covariance matrix covariance $\tilde{\mathbf{C}}_t$ may have a size of $q \times q$.

Then, the radio unit calculates, in block 302, a constituent matrix of a Gramian matrix, where the Gramian matrix is equal to the Nyström approximation of the short-term channel covariance matrix. Specifically, the calculation of the constituent matrix in block 302 may be carried out, in an indirect manner, as a matrix product of the semi-compressed short-term channel covariance matrix (calculated in block 204 of FIG. 2) and an inverse square root of the fully compressed short-term channel covariance matrix (calculated in block 301). As the constituent matrix is the constituent matrix $\mathbf{X}_t$ of the Gramian matrix $\hat{\mathbf{C}}_t$ (with $\hat{\mathbf{C}}_t$ being equal to the Nyström approximation of the (full) short-term channel covariance matrix), the Gramian equation $\hat{\mathbf{C}}_t = \mathbf{X}_t \mathbf{X}_t^{\mathrm{H}} = \mathbf{Y}_t \tilde{\mathbf{C}}_t^{-\frac{1}{2}} \left( \mathbf{Y}_t \left( \tilde{\mathbf{C}}_t \right)^{-\frac{1}{2}} \right)^{\mathrm{H}}$ applies here. Therefore, the radio unit may calculate, in block 302, the constituent matrix $\mathbf{X}_t$ of the Gramian matrix $\hat{\mathbf{C}}_t$ according to

$$\mathbf{X}_t = \mathbf{Y}_t \tilde{\mathbf{C}}_t^{-\frac{1}{2}}. \qquad (9)$$

It should be emphasized that the Nyström approximation of the (full) short-term channel covariance matrix, i.e.,

$\hat{\mathbf{C}}_t = \mathbf{Y}_t \tilde{\mathbf{C}}_t^{-\frac{1}{2}} \left( \mathbf{Y}_t \left( \tilde{\mathbf{C}}_t \right)^{-\frac{1}{2}} \right)^{\mathrm{H}}$, does not have to be calculated in full here by the radio unit. Only the computationally less costly equation (9) has to be evaluated as the constituent matrix $\mathbf{X}_t$ (or the SVD thereof) already enables us to calculate the approximate eigenvectors and eigenvalues, as will be described below. In other words, the matrix $\hat{\mathbf{C}}_t$ itself is not needed for this calculation.

In practice, the calculation of (9) may be carried out in two parts. First, the radio unit may calculate an inverse

square root matrix $\widetilde{\mathbf{B}}_t = \tilde{\mathbf{C}}_t^{-\frac{1}{2}}$ (defined such that $\widetilde{\mathbf{B}}_t \widetilde{\mathbf{B}}_t^{\mathrm{H}} = \tilde{\mathbf{C}}_t^{-1}$ applies), that is, the radio unit may calculate an inverse square root of the fully compressed short-term channel covariance matrix. The inverse square root matrix may be calculated, e.g., using Cholesky decomposition or SVD. Then, the radio unit may calculate the low rank approximation matrix $\mathbf{X}_t$ as $\mathbf{X}_t = \mathbf{Y}_t \widetilde{\mathbf{B}}_t$

The radio unit calculates, in block 303, an SVD of the low rank approximation matrix $\mathbf{X}_t$. The SVD may be calculated using any conventional method (e.g., using the Jacobi SVD algorithm, the Lanczos algorithm or the Golub-Reinsch algorithm).

The radio unit determines, in block 304, based on the SVD, the one or more approximate short-term eigenvalues and/or the one or more approximate short-term eigenvectors. In some embodiments, at least the one or more approximate short-term eigenvectors may be determined. The determining in block 304 may comprise determining $L$ most dominant left-singular vectors of $\mathbf{X}_t$, where $L$ is a positive integer smaller than or equal to $q$ (i.e., being the compressed dimension of the compression matrix). The $L$ most dominant left-singular vectors may be defined as $L$ left-singular vectors associated with $L$ largest singular values of the SVD. As was indicated above, these $L$ most dominant left-singular vectors correspond to an approximation of $L$ most dominant eigenvectors of the short-term channel covariance matrix. Thus, based on the $L$ most dominant left-singular vectors of $\mathbf{X}_t$, the radio unit may form an eigenvector matrix $\hat{\mathbf{V}}_t$. Additionally or alternatively, the radio unit may determine $L$ most dominant singular values of $\mathbf{X}_t$, $s_{t,1}, \ldots, s_{t,L}$. Then, the radio unit may determine (an approximation of) $L$ largest eigenvalues $\lambda_{t,1}, \ldots, \lambda_{t,L}$ of the short-term channel covariance matrix as $\lambda_{t,k} = s_{t,k}^2$ (for $k$=1, 2,..., $L$).

Following the execution of block 304, the process may proceed, e.g., as discussed in connection with elements 206 to 208 of FIG. 2 or as will be described in embodiments to be discussed below.

From a front-haul point of view, it is beneficial to do as much of the aforementioned processing as possible at the radio unit as the amount of information that needs to processed simultaneously is reduced in the averaging and SVD steps (as a single distributed unit is typically connected to multiple radio units). However, other engineering considerations suggest doing as much processing as possible at the distributed unit may be beneficial. These other engineering considerations may comprise, e.g., desired limits for weight, power consumption and/or physical footprint of the radio unit. Therefore, it could be beneficial, at least in some use cases, to carry out some of the steps carried out by the radio unit in FIGs. 2 and/or 3 by the distributed unit instead.

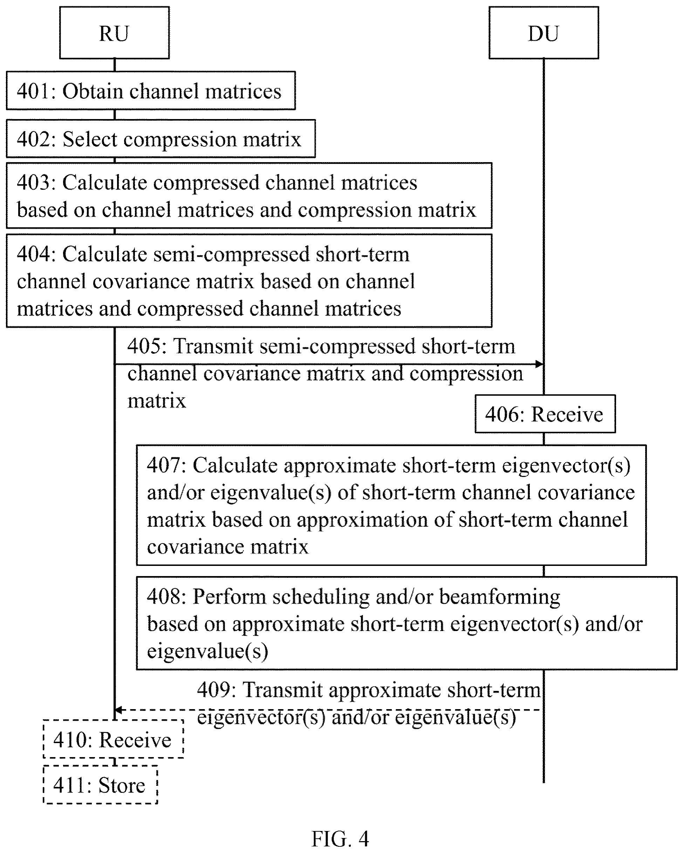

Accordingly, FIG. 4 illustrates alternative signaling between a radio unit of a distributed access node and a distributed unit of the distributed access node for estimating eigenvectors and/or eigenvalues of a short-term channel covariance matrix of a radio channel according to embodiments. The radio unit of FIG. 4 may be a radio unit 116, 118 of FIG. 1 and/or the distributed unit of FIG. 4 may be a distributed unit 104 of FIG. 1.

Referring to FIG. 4, the initial steps carried out by the radio unit in block 401 to 404 may correspond fully to steps described above in connection with blocks 201 to 204 of FIG. 2 and are, thus, not repeated here for brevity. However, instead of calculating the eigenvector(s) and/or eigenvalue(s) itself based on the semi-compressed short-term channel covariance matrix and the compression matrix, the radio unit transmits, in message 405, the semi-compressed short-term channel covariance matrix and the compression matrix to the distributed unit for enabling the distributed unit to carry out this calculation.

The distributed unit receives, in block 406, the semi-compressed short-term channel covariance matrix and the compression matrix from the radio unit. Then, the distributed unit calculates, in block 407, one or more approximate short-term eigenvectors and/or one or more approximate short-term eigenvalues of a short-term channel covariance matrix based on an approximation of a short-term channel covariance matrix, where said approximation is based on the semi-compressed short-term channel covariance matrix and the compression matrix. The calculation of block 407 may correspond fully to the calculation discussed in connection with block 205 of FIG. 2 (apart from the fact that the entity carrying out the calculation is different). Thus, any of the features and definitions discussed in connection with block 205 of FIG. 2 may apply also here. The detailed implementation of block 205 of FIG. 2 discussed in connection with FIG. 3 may apply also for block 407 of FIG. 4, in some embodiments

Similar to block 208 of FIG. 2, the distributed unit uses, in block 408, the one or more approximate short-term eigenvectors and/or the one or more approximate short-term eigenvalues (or at least some of them) for scheduling and/or beamforming (e.g., beamforming weight calculation). In some embodiments, at least the one or more approximate short-term eigenvectors may be used in block 408. In some embodiments, at least the beamforming may be carried out in block 408. Block 408 may correspond to block 208 of FIG. 2.

Optionally, the distributed unit may transmit, in message 409, the calculated one or more approximate short-term eigenvectors and/or the calculated one or more approximate short-term eigenvalues to the radio unit. The radio unit may receive, in block 410, the one or more approximate short-term eigenvectors and/or the one or more approximate short-term eigenvalues and store them to at least one memory of the radio unit and/or to at least one (external) memory accessible by the radio unit. Subsequently, the one or more approximate short-term eigenvectors and/or the one or more approximate short-term eigenvalues may be used, e.g., for the compression matrix selection bootstrapping functionalities as discussed in connection with block 202 of FIG. 2. Said bootstrapping functionalities may be employed especially when the one or more approximate short-term eigenvectors and/or the one or more approximate short-term eigenvalues comprise a plurality of approximate short-term eigenvectors and/or a plurality of approximate short-term eigenvalues. The number of the plurality of approximate short-term eigenvectors and/or the number of the plurality of approximate short-term eigenvalues may be equal to parameter q (i.e., to the compressed dimension of the compression matrix).

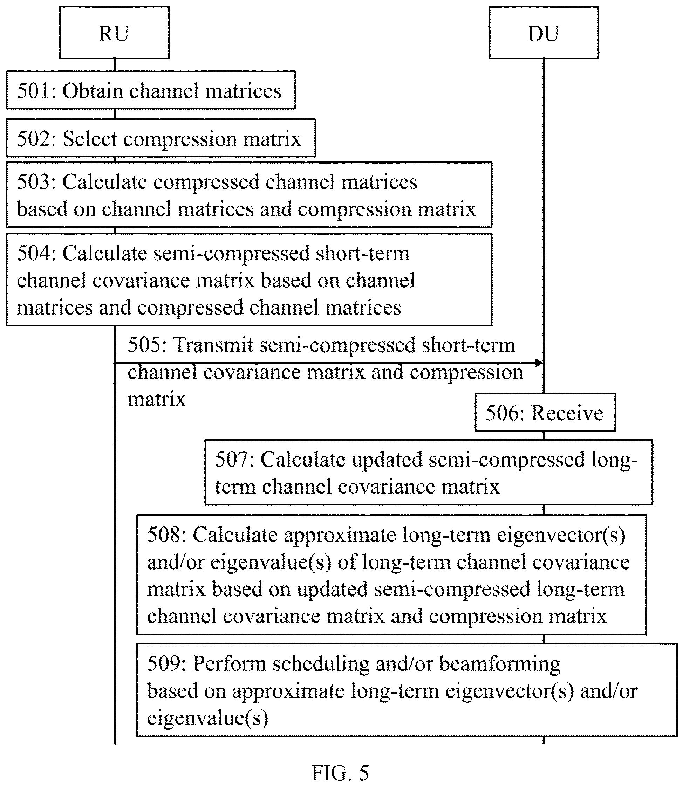

The above embodiments related solely to steps for evaluating approximate short-term eigenvalues and/or eigenvectors of a short-term channel covariance matrix carried out by the RU and DU. However, the same concept may be used also for evaluation of approximate long-term eigenvalues and/or eigenvectors. FIGs. 5 to 7 FIG. 4 illustrate three different alternatives for carrying out the calculation of the approximate long-term eigenvalues and/or eigenvectors using a distributed access node architecture. As the following discussion considers both short-term and long-term quantities, the subscripts "ST" (short-term) and "LT" (long-term) are used for differentiating between short-term and long-term quantities in the equations.

FIG. 5 illustrates first alternative signaling between a radio unit of a distributed access node and a distributed unit of the distributed access node for estimating (or approximating) eigenvectors and/or eigenvalues of a long-term channel covariance matrix of a radio channel according to embodiments. The radio unit of FIG. 5 may be a radio unit 116, 118 of FIG. 1 and/or the distributed unit of FIG. 5 may be a distributed unit 104 of FIG. 1.

Referring to FIG. 5, the initial steps carried out by the radio unit in block 501 to 504 may correspond fully to steps described above in connection with blocks 201 to 204 of FIG. 2 (or blocks 401 to 404 of FIG. 4) and are, thus, not repeated here for brevity. Moreover, the message 505 and block 506 may correspond fully to message 405 and block 406 and are, thus, also not repeated here. However, instead of calculating the approximate eigenvector(s) and/or eigenvalue(s) of the short-term channel covariance matrix based on the received semi-compressed short-term channel covariance matrix and compression matrix, the distributed unit carries out, in blocks 507 to 509, actions for calculating the eigenvector(s) and/or eigenvalue(s) of the long-term channel covariance matrix.

Namely, the distributed unit first calculates, in block 507, an updated semi-compressed long-term channel covariance matrix based at least on a previous (i.e., previously calculated) semi-compressed long-term channel covariance matrix and the received semi-compressed short-term channel covariance matrix. It is assumed here that the previous semi-compressed long-term channel covariance matrix is maintained in at least one memory of the distributed unit or in at least one (external) memory accessible by the distributed unit. The previous semi-compressed long-term channel covariance matrix may have been calculated during the previous execution of the procedure of FIG. 5 (based on the preceding semi-compressed long-term channel covariance matrix). In other words, the calculation of block 507 may correspond to an iterative update of the semi-compressed long-term channel covariance matrix. The initial semi-compressed long-term channel covariance matrix determined during the initial execution of FIG. 5 may be, e.g., equal to the semi-compressed short-term channel matrix.

In some embodiments, the calculating of the updated semi-compressed long-term channel covariance matrix in block 507 may comprise: calculating the updated long-term channel covariance matrix as a sum of a product of a first pre-defined weighting term and the previous semi-compressed long-term channel covariance matrix and a product of a second pre-defined weighting term and the semi-compressed short-term channel covariance matrix. Here, the first and second pre-predefined weighting terms are positive real numbers smaller than one such that a sum of the first and second pre-predefined weighting terms is equal to one. Thus, the calculation of block 507 may correspond to calculation of a current exponential average of the semi-compressed long-term channel covariance matrix (i.e., the updated semi-compressed long-term channel covariance matrix) based on a previous exponential average (i.e., the previous semi-compressed long-term channel covariance matrix), a current observation (i.e., the semi-compressed short-term channel covariance matrix) and a pre-defined smoothing factor. In other words, the calculating of the updated semi-compressed long-term channel covariance matrix $\mathbf{Y}_{\mathrm{LT},t}$ in block 507 may be carried out according to:

$$\mathbf{Y}_{\mathrm{LT},t} = (1 - \alpha)\mathbf{Y}_{\mathrm{LT},t-1} + \alpha\mathbf{Y}_{\mathrm{ST},t}, \qquad (10)$$

where $\alpha$ is the smoothing factor, $(1 - \alpha)$ and $\alpha$ are the first and second pre-defined weighting terms, $\mathbf{Y}_{\mathrm{LT},t-1}$ is the previous semi-compressed long-term channel covariance matrix (as indicated by the time index t-1) and $\mathbf{Y}_{\mathrm{ST},t}$ is the semi-compressed short-term channel covariance matrix. The term $\alpha$ may be called a smoothing factor.

The distributed unit may store the updated semi-compressed long-term channel covariance matrix to at least one memory of the distributed unit or to at least one (external) memory accessible by the distributed unit.

The distributed unit calculates, in block 508, one or more approximate long-term eigenvectors and/or one or more approximate long-term eigenvalues of a long-term channel covariance matrix based on an approximation of the long-term channel covariance matrix. Here, the approximation of the long-term channel covariance matrix is based on the updated semi-compressed long-term channel covariance matrix and the (short-term) compression matrix. Similar to previous embodiments, the approximation may be the Nyström approximation. In general, any of features and definitions discussed in connection with block 205 of FIG. 2 may apply, *mutatis mutandis,* also here (though obviously here long-term quantities are considered instead of short-term quantities).

The one or more approximate long-term eigenvalues may comprise at least one or more dominant (i.e., largest) approximate long-term eigenvalues. The one or more approximate long-term eigenvectors may comprise at least one or more dominant approximate long-term eigenvectors, that is, one or more approximate long-term eigenvectors corresponding to the one or more dominant (i.e., largest) approximate long-term eigenvalues. In some embodiments, the one or more approximate long-term eigenvectors may comprise a plurality of (dominant) approximate long-term eigenvectors (e.g., all of the approximate long-term eigenvectors) and/or the one or more approximate long-term eigenvalues may comprise a plurality of (dominant) approximate long-term eigenvalues (e.g., all of the approximate long-term eigenvalues). In some embodiments, the distributed unit may calculate at least the one or more long-term eigenvectors (or the plurality of long-term eigenvectors).

The calculating of the one or more approximate long-term eigenvectors and/or the one or more long-term eigenvalues of the long-term channel covariance matrix in block 508 may be based on an SVD of a constituent matrix of a Gramian matrix, where the Gramian matrix is equal to a Nyström approximation of the long-term channel covariance matrix (which is defined based on the semi-compressed long-term channel covariance matrix and the compression matrix). In other words, the radio unit may calculate, in block 508, an SVD of a constituent matrix of a Gramian representation (or of a Gramian decomposition) of a Nyström approximation of the long-term channel covariance matrix and determine, also in block 508, the one or more approximate long-term eigenvectors and/or the one or more long-term eigenvalues of the long-term channel covariance matrix based on the SVD. Thus, instead of calculating the Nyström approximation of the long-term channel covariance matrix directly and carrying out EVD for said Nyström approximation, the plurality of approximate long-term eigenvectors and/or the plurality of approximate long-term eigenvalues of the long-term channel covariance matrix may be calculated indirectly based on fundamental properties of Gramian matrices and SVD. This provides the benefit of reduced computational complexity.

The calculation of block 508 may correspond, *mutatis mutandis,* to the process of FIG. 3 (with short-term quantities apart from the compression matrix replaced with long-term quantities). Any of the features and definitions provided in connection with FIG. 3 may apply, *mutatis mutandis,* also here. Thus, the calculating of the one or more approximate long-term eigenvectors and/or the one or more approximate long-term eigenvalues of the long-term channel covariance matrix may comprise at least:

3.1) calculating a fully compressed long-term channel covariance matrix based on the (short-term) compression matrix and the semi-compressed long-term channel covariance matrix;

3.2) calculating the constituent matrix of the Gramian matrix as a matrix product of the semi-compressed long-term channel covariance matrix and an inverse square root of the fully compressed long-term channel covariance matrix;

3.3) calculating the SVD of the constituent matrix of the Gramian matrix; and

3.4) determining, based on the SVD, the one or more approximate long-term eigenvalues and/or the one or more approximate long-term eigenvectors. Here, step 3.1) may comprise: calculating the fully compressed long-term channel covariance matrix as a matrix product of a conjugate transpose of the (short-term) compression matrix and the semi-compressed long-term channel covariance matrix, similar to equation (8). In other words, the distributed unit may calculate the fully compressed long-term channel covariance matrix $\tilde{C}_{\mathrm{LT},t}$ according to:

$$\tilde{C}_{\mathrm{LT},t} = \Omega_t^{\mathrm{H}} Y_{\mathrm{LT},t} \qquad (11)$$

where $\Omega_t$ is the (short-term) compression matrix and $Y_{\mathrm{LT},t}$ is the updated semi-compressed long-term channel covariance matrix. Additionally or alternatively, the constituent matrix $X_{\mathrm{LT},t}$ may be calculated, in step 3.2), according to

$$X_{\mathrm{LT},t} = Y_{\mathrm{LT},t} \tilde{C}_{\mathrm{LT},t}^{-\frac{1}{2}}. \qquad (12)$$

Additionally or alternatively, step 3.4) may comprise: determining the one or more approximate long-term eigenvalues as squares of *M* largest singular values of the constituent matrix ($X_{\mathrm{LT},t}$) of the Gramian matrix of the Nyström approximation of the long-term channel covariance matrix and determining the one or more long-term eigenvectors as *M* left-singular vectors of the constituent matrix corresponding to the *M* largest singular values. Here, *M* is a positive integer equal to or smaller than a size of a compressed dimension of the (short-term) compression matrix (i.e., $M \leq q$).

The distributed unit performs, in block 509, scheduling and/or beamforming (e.g., beamforming weight calculation) based on the one or more approximate long-term eigenvectors and/or the one or more approximate long-term eigenvalues. In other words, the one or more approximate long-term eigenvectors and/or the one or more approximate long-term eigenvalues (or at least some of them) may be used as inputs of a scheduling and/or beamforming algorithm. In some embodiments, at least the one or more approximate long-term eigenvectors may be used in block 509. In some embodiments, at least the beamforming may be carried out in block 509.

In some embodiments, at least *n* most dominant approximate long-term eigenvectors and/or eigenvalues may be used for the scheduling and/or beamforming in block 509, where n is a (pre-defined) integer larger than zero.

It should be noted that when the (short-term) compression matrix selected in block 502 is pre-defined or static (the same compression matrix $\Omega_t = \Omega_0$ is used for all *t*), the semi-compressed long-term channel covariance matrix $Y_{\mathrm{LT},t}$ has the same form as one would obtain if compressing the long-term channel covariance matrix $C_{\mathrm{LT},t}$ with $\Omega_0$. In other words, the following holds true: $Y_{\mathrm{LT},t} = C_{\mathrm{LT},t} \Omega_0$. Thus, in this special case, the one or more eigenvalues and/or the one or more eigenvectors of the Nyström approximation of the long-term channel covariance matrix $C_{\mathrm{LT},t}$ with respect to $\Omega_0$ are obtained in block 508. Therefore, selecting in block 502 to use a pre-defined (short-term) compression matrix (that is, the same pre-defined compression matrix each time the procedure of FIG. 5 is repeated) may be considered especially beneficial here.

In some embodiments, the distributed unit may carry out both steps of blocks 407, 408 (optionally also transmission of message 409) of FIG. 4 as well as steps of blocks 507 to 509 of FIG. 5. In other words, in some embodiments, the distributed unit may calculate both one or more approximate short-term eigenvectors and/or one or more approximate short-term eigenvalues as well as one or more approximate long-term eigenvectors and/or one or more approximate long-term eigenvalues and use all or any of said calculated quantities for the scheduling and/or beamforming.

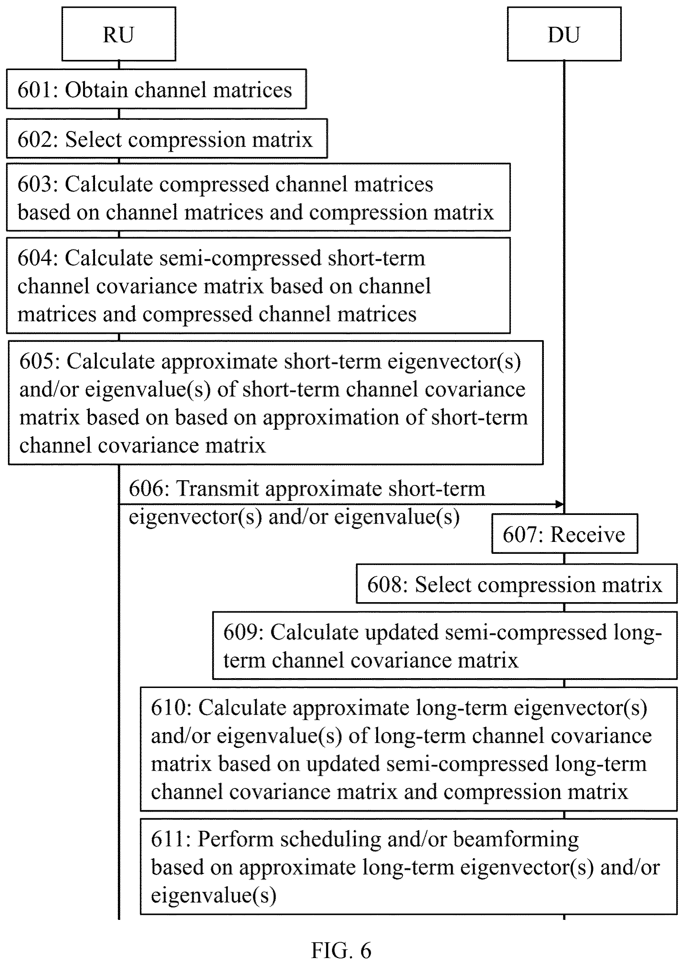

As was discussed above, the procedure of FIG. 5 may be especially suitable for use in cases where the compression matrix is selected to be static (i.e., pre-defined). FIG. 6 illustrates second alternative signaling between a radio unit of a distributed access node and a distributed unit of the distributed access node for estimating (or approximating) eigenvectors and/or eigenvalues of a long-term channel covariance matrix of a radio channel according to embodiments. The procedure of FIG. 6 is well-suited for use with either static or dynamically varying compression matrices. The radio unit of FIG. 6 may be a radio unit 116, 118 of FIG. 1 and/or the distributed unit of FIG. 6 may be a distributed unit 104 of FIG. 1.

Referring to FIG. 6, the initial steps of the procedure relating to elements 601 to 607 may correspond fully to steps described above in connection with blocks 201 to 207 of FIG. 2 and are, thus, not repeated here for brevity. However, instead of performing scheduling and/or beamforming directly based on the received approximate eigenvector(s) and/or eigenvalue(s) of the short-term channel covariance matrix, the distributed unit carries out, in blocks 608 to 610, actions for calculating the approximate eigenvector(s) and/or eigenvalue(s) of the long-term channel covariance matrix and performing the scheduling and/or beamforming based thereon (or at least based thereon).

In some embodiments, the radio unit may store the one or more approximate short-term eigenvectors and/or the one or more approximate short-term eigenvalues of the short-term channel covariance matrix (as calculated in block 605) to at least one memory of the radio unit or at least one (external) memory accessible by the radio unit. The one or more approximate short-term eigenvectors may be stored, for example, in the form of an eigenvector matrix. The one or more approximate short-term eigenvalues may be stored, for example, in the form of an eigenvalue vector or a diagonal eigenvalue matrix.

The distributed unit selects, in block 608, a compression matrix according to a compression matrix selection scheme. The compression matrix selection according to the compression matrix selection scheme may be carried out similar to as described in connection with block 202 of FIG. 2 (i.e., similar to block 602). For example, the compression matrix selected in block 608 may be a pre-defined or random submatrix of a permutation matrix or a compression matrix defined via bootstrapping, e.g., based on previous eigenvectors of the long-term channel covariance matrix. As an example of the last alternative, the long-term compression matrix $\Omega_{\text{LT},t}$ may be selected to be $\Omega_{\text{LT},t} = \hat{\mathbf{V}}_{\text{LT},t-1}$, $\hat{\mathbf{V}}_{\text{LT},t-1}$ is an eigenvector matrix comprising previous eigenvectors of the long-term channel covariance matrix. In general, the compression matrix may have the same size as $\hat{\mathbf{V}}_{\text{LT},t-1}$. However, the used compression matrix selection scheme in blocks 602, 608 may not be the same. Also, even if the same compression matrix selection scheme is used in blocks 602, 608, the selected compression matrix may not be the same.

The distributed unit calculates, in block 609, an updated semi-compressed long-term channel covariance matrix based at least on the (long-term) compression matrix selected in block 608, a previous semi-compressed long-term channel covariance matrix maintained in the at least one memory, the one or more approximate short-term eigenvectors and the one or more approximate short-term eigenvalues.

In some embodiments, the calculating of the updated long-term channel covariance matrix in block 609 may comprise: calculating the updated semi-compressed long-term channel covariance matrix $\mathbf{Y}_{\text{LT},t}$ according to

$$\mathbf{Y}_{\text{LT},t} = (1-\alpha)\hat{\mathbf{V}}_{\text{LT},t-1}\hat{\mathbf{\Lambda}}_{\text{LT},t-1}\left(\hat{\mathbf{V}}_{\text{LT},t-1}^{\text{H}}\mathbf{\Omega}_{\text{LT},t}\right) + \alpha\hat{\mathbf{V}}_{\text{ST},t}\hat{\mathbf{\Lambda}}_{\text{ST},t}\left(\hat{\mathbf{V}}_{\text{ST},t}^{\text{H}}\mathbf{\Omega}_{\text{LT},t}\right), \qquad (13)$$

where $\alpha$ is a (pre-defined) weighting term (or a pre-defined smoothing factor), $\hat{\mathbf{V}}_{\text{LT},t-1}$ is an eigenvector matrix comprising previous (i.e., previously calculated) approximate long-term eigenvectors of the (previous) long-term channel covariance matrix, $\hat{\mathbf{\Lambda}}_{\text{LT},t-1}$ is a diagonal eigenvalue matrix comprising previous (i.e., previously calculated) approximate long-term eigenvalues of the (previous) long-term channel covariance matrix, $\Omega_{\text{LT},t}$ is the (long-term) compression matrix and $\hat{\mathbf{V}}_{\text{ST},t}$ is an eigenvector matrix comprising a plurality of (current) approximate short-term eigenvectors of the short-term channel covariance matrix. Here, the term $\hat{\mathbf{V}}_{\text{LT},t-1}\hat{\mathbf{\Lambda}}_{\text{LT},t-1}\hat{\mathbf{V}}_{\text{LT},t-1}^{\text{H}}$ corresponds to a previous estimate of the long-term channel covariance matrix.

To provide motivation for equation (13), it is first noted that the long-term channel covariance matrix is defined as $\mathbf{C}_{\text{LT},t} = (1-\alpha)\mathbf{C}_{\text{LT},t-1} + \alpha\mathbf{C}_{\text{ST},t}$, according to (3). Now, if we replace $\mathbf{C}_{\text{LT},t-1}$ and $\mathbf{C}_{\text{ST},t}$ with available low-rank approximations based on eigenvectors and eigenvalues, we get the approximate equation:

$$\mathbf{C}_{\text{LT},t} \approx (1-\alpha)\hat{\mathbf{V}}_{\text{LT},t-1}\hat{\mathbf{\Lambda}}_{\text{LT},t-1}\hat{\mathbf{V}}_{\text{LT},t-1}^{\text{H}} + \alpha\hat{\mathbf{V}}_{\text{ST},t}\hat{\mathbf{\Lambda}}_{\text{ST},t}\hat{\mathbf{V}}_{\text{ST},t}^{\text{H}}. \qquad (14)$$

Multiplying (14) on the right by the (long-term) compression matrix $\Omega_{\text{LT},t}$, we get the update equation of (13).

The distributed unit calculates, in block 610, one or more approximate long-term eigenvectors and/or one or more approximate long-term eigenvalues of a long-term channel covariance matrix based on an approximation of the long-term channel covariance matrix. Here, the approximation (being, e.g., the Nyström approximation) of the long-term channel covariance matrix is based on the updated semi-compressed long-term channel covariance matrix ($Y_{LT,t}$) and the (long-term) compression matrix ($\Omega_{LT,t}$). Block 610 may correspond to block 508 of FIG. 5 with the only difference being that, in block 610, the used compression matrix is the long-term compression matrix selected in block 608, as opposed to a short-term compression matrix received from the radio unit as in block 508.

In some embodiments, the distributed unit may store the one or more approximate long-term eigenvectors and/or the one or more approximate long-term eigenvalues of a long-term channel covariance matrix to at least one memory of the distributed unit or to at least one (external) memory accessible by the distributed unit.

The distributed unit performs, in block 611, scheduling and/or beamforming based on the one or more approximate long-term eigenvectors and/or the one or more approximate long-term eigenvalues. In some embodiments, at least the one or more approximate long-term eigenvectors may be used in block 611. In some embodiments, at least the beamforming may be carried out in block 611. Block 611 may correspond to block 509 of FIG. 5.

In some embodiments, the scheduling and/or beamforming in block 611 may be further based on the one or more approximate short-term eigenvectors and/or the one or more approximate short-term eigenvalues.

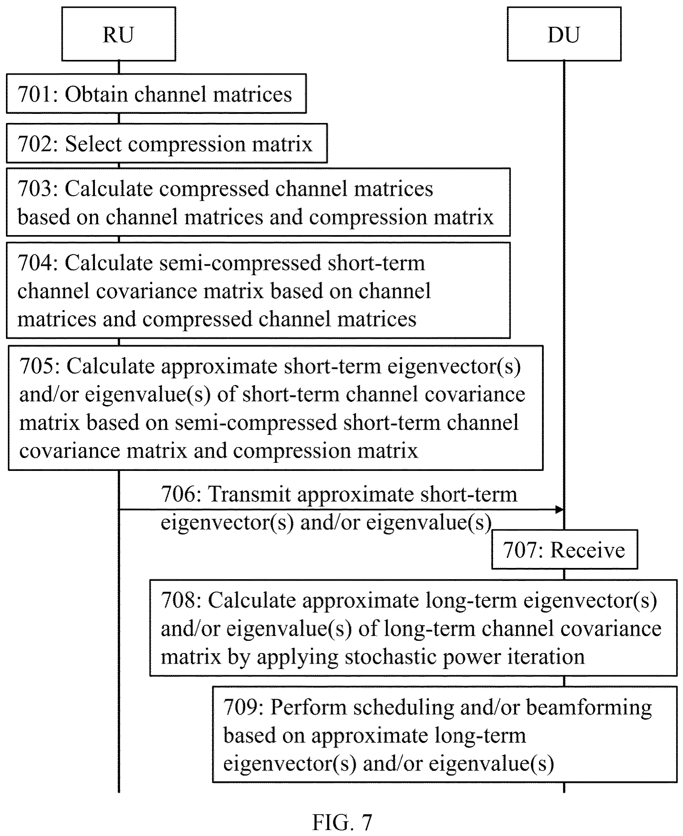

FIG. 7 illustrates third alternative signaling between a radio unit of a distributed access node and a distributed unit of the distributed access node for estimating (or approximating) eigenvectors and/or eigenvalues of a long-term channel covariance matrix of a radio channel according to embodiments. In particular, the procedure of FIG. 7 is based on stochastic power iteration. Similar to FIG. 6, the procedure of FIG. 7 is well-suited for use with either static or dynamically varying compression matrix. The radio unit of FIG. 7 may be a radio unit 116, 118 of FIG. 1 and/or the distributed unit of FIG. 7 may be a distributed unit 104 of FIG 1.

Referring to FIG. 7, the initial steps of the procedure relating to elements 701 to 707 may correspond fully to steps described above in connection with blocks 201 to 207 of FIG. 2 and are, thus, not repeated here for brevity. However, instead of performing scheduling and/or beamforming directly based on the received approximate eigenvector(s) and/or eigenvalue(s) of the short-term channel covariance matrix, the distributed unit carries out, in blocks 708 to 709, actions for calculating the approximate eigenvector(s) and/or eigenvalue(s) of the long-term channel covariance matrix based on stochastic power iteration and performing the scheduling and/or beamforming based thereon (or at least based thereon).

In some embodiments, the radio unit may store the one or more approximate short-term eigenvectors and/or the one or more approximate short-term eigenvalues of the short-term channel covariance matrix (as calculated in block 705) to at least one memory of the radio unit or at least one (external) memory accessible by the radio unit. The one or more approximate short-term eigenvectors may be stored, for example, in the form of an eigenvector matrix. The one or more approximate short-term eigenvalues may be stored, for example, in the form of an eigenvalue vector or a diagonal eigenvalue matrix.

The distributed unit calculates, in block 708, one or more approximate long-term eigenvectors and/or one or more approximate long-term eigenvalues of a long-term channel covariance matrix by applying a stochastic power iteration scheme. The stochastic power iteration scheme may take as inputs the one or more approximate short-term eigenvectors and/or the one or more approximate short-term eigenvalues of the short-term channel covariance matrix (received in block 707) as well as one or more previous approximate long-term eigenvectors and/or one or more previous approximate long-term eigenvalues of a previous long-term channel covariance matrix. Here, the one or more previous approximate long-term eigenvectors and/or the one or more previous approximate long-term eigenvalues may be maintained in at least one memory of the distributed unit or in at least one (external) memory accessible by the distributed unit. Both the inputs and outputs of the stochastic power iteration scheme may correspond to (most) dominant eigenvalues and/or (most) dominant eigenvectors.

In some embodiments, the stochastic power iteration scheme of block 708 may take as inputs a plurality of (dominant) approximate short-term eigenvectors and a plurality of (dominant) approximate short-term eigenvalues of the short-term channel covariance matrix and a plurality of previous (dominant) approximate long-term eigenvectors and a plurality of previous (dominant) approximate long-term eigenvalues of the previous long-term channel covariance matrix. Moreover, the stochastic power iteration scheme of block 708 may output a plurality of (dominant) approximate long-term eigenvectors and a plurality of (dominant) approximate long-term eigenvalues of the long-term channel covariance matrix. The number of any of the different types of plurality of eigenvectors and/or eigenvalues mentioned in this paragraph may be equal to $q$ (i.e., size of the compressed dimension of the compression matrix).

According to a general definition, a power iteration is a scheme for iteratively approximating the dominant eigenvector(s) of a matrix. In stochastic power iteration, randomness or sampling techniques are incorporated into the basic power iteration in order to handle larger matrices, where computing the entire matrix directly might be computationally demanding. The stochastic power iteration may be used for estimating the dominant eigenvectors of a covariance matrix based on previously calculated dominant eigenvectors and a number of data vectors $x_i$ that are sampled from a probability distribution with the covariance of interest.

The stochastic power iteration may be applied for calculation of the one or more approximate long-term eigenvectors and/or the one or more approximate long-term eigenvalues of a long-term channel covariance matrix in block 708 in the following manner. The distributed unit may calculate an intermediary (or auxiliary) matrix $\tilde{\mathbf{V}}_{\mathrm{LT},t}$ according to:

$$\tilde{\mathbf{V}}_{\mathrm{LT},t} = \widehat{\mathbf{V}}_{\mathrm{LT},t-1} + \alpha \widehat{\mathbf{V}}_{\mathrm{ST},t} \widehat{\mathbf{\Lambda}}_{\mathrm{ST},t} \widehat{\mathbf{V}}_{\mathrm{ST},t}^{\mathrm{H}} \widehat{\mathbf{V}}_{\mathrm{LT},t-1} \qquad (15)$$

where $\widehat{\mathbf{V}}_{\mathrm{LT},t-1}$ is the previous long-term eigenvector matrix comprising the one or more previous approximate long-term eigenvectors (maintained in at least one memory of the distributed unit or at least one external accessible by the distributed unit), $\alpha$ is a (pre-defined) step size, $\widehat{\mathbf{V}}_{\mathrm{ST},t}$ is short-term eigenvector matrix comprising the one or more approximate short-term eigenvectors (received in block 707) and $\widehat{\mathbf{\Lambda}}_{\mathrm{ST},t}$ is a diagonal matrix comprising the one or more approximate short-term eigenvalues (received in block 707). Here, the term $\widehat{\mathbf{V}}_{\mathrm{ST},t} \widehat{\mathbf{\Lambda}}_{\mathrm{ST},t} \widehat{\mathbf{V}}_{\mathrm{ST},t}^{\mathrm{H}}$ corresponds to the (most recent) rank-q approximation of the short-term channel covariance matrix which acts here as a rank-q estimate for the long-term channel covariance matrix. In some embodiments, the calculation of (15) may be carried out in two parts so that the distributed unit may, first, calculate a matrix $\mathbf{B}_t = \widehat{\mathbf{V}}_{\mathrm{ST},t}^{\mathrm{H}} \widehat{\mathbf{V}}_{\mathrm{LT},t-1}$ and, then, calculate the intermediary matrix as $\tilde{\mathbf{V}}_{\mathrm{LT},t} = \widehat{\mathbf{V}}_{\mathrm{LT},t-1} + \alpha \widehat{\mathbf{V}}_{\mathrm{ST},t} \widehat{\mathbf{\Lambda}}_{\mathrm{ST},t} \mathbf{B}_t$.

Following the calculation of the intermediary matrix $\tilde{\mathbf{V}}_{\mathrm{LT},t}$, the distributed unit may further perform Gram-Schmidt orthogonalization on the intermediary matrix $\tilde{\mathbf{V}}_{\mathrm{LT},t}$ to obtain an updated approximate long-term eigenvector matrix $\widehat{\mathbf{V}}_{\mathrm{LT},t}$ comprising the one or more approximate long-term eigenvectors. Gram-Schmidt orthogonalization, also sometimes referred to as QR decomposition, is a method for converting a set of linearly independent vectors into an orthogonal or orthonormal set of vectors in an inner product space (e.g., in Euclidean space). Thus, following the Gram-Schmidt orthogonalization, the updated approximate long-term eigenvector matrix $\widehat{\mathbf{V}}_{\mathrm{LT},t}$ is an orthogonal or orthonormal set of vectors, that is, $\widehat{\mathbf{V}}_{\mathrm{LT},t}^{\mathrm{H}} \widehat{\mathbf{V}}_{\mathrm{LT},t} = \mathbf{I}_q$ holds true (with $\mathbf{I}_q$ being an identity matrix with size $q \times q$).

Optionally, the distributed unit may further calculate, in block 708, the one or more approximate long-term eigenvalues of the long-term channel covariance matrix by calculating an updated long-term eigenvalue vector $\hat{\lambda}_{\mathrm{LT},t}$ comprising the one or more approximate long-term eigenvalues of the long-term channel covariance matrix. Namely, the updated long-term eigenvalue vector $\hat{\lambda}_{\mathrm{LT},t}$ may be calculated according to:

$$\hat{\lambda}_{\mathrm{LT},t} = (1 - \alpha)\hat{\lambda}_{\mathrm{LT},t-1} + \alpha \, \mathrm{diag}\big(\mathbf{B}_t^{\mathrm{H}} \widehat{\mathbf{\Lambda}}_{\mathrm{ST},t} \mathbf{B}_t\big), \qquad (16)$$

where $\alpha$ is a (pre-defined) step size, $\hat{\lambda}_{\mathrm{LT},t-1}$ is a previous updated long-term eigenvalue vector comprising one or more previous approximate long-term eigenvalues $\widehat{\mathbf{\Lambda}}_{\mathrm{ST},t}$ is a diagonal eigenvalue matrix formed based on the one or more approximate short-term eigenvalues, $\mathbf{B}_t$ is defined as $\mathbf{B}_t = \widehat{\mathbf{V}}_{\mathrm{ST},t}^{\mathrm{H}} \widehat{\mathbf{V}}_{\mathrm{LT},t-1}$ and 'diag' is a function extracting diagonal elements of a matrix into a vector. The parameter $\alpha$ may or may not have the same value when calculating the approximate long-term eigenvectors according to (15) and when calculating the approximate long-term eigenvalues according to (16).

In some embodiments, the distributed unit may store the one or more approximate long-term eigenvectors and/or the one or more approximate long-term eigenvalues of the long-term channel covariance matrix to at least one memory of the distributed unit or to at least one (external) memory accessible by the distributed unit. The one or more approximate long-term eigenvectors may be stored, for example, in the form of an eigenvector matrix. The one or more approximate long-term eigenvalues may be stored, for example, in the form of an eigenvalue vector or a diagonal eigenvalue matrix.

The distributed unit performs, in block 709, scheduling and/or beamforming (e.g., beamforming weight calculation) based on the one or more approximate long-term eigenvectors and/or the one or more approximate long-term eigenvalues. In some embodiments, at least the one or more approximate long-term eigenvectors (or a plurality of approximate long-term eigenvectors) may be used in block 709. In some embodiments, at least the beamforming may be carried out in block 709. Block 709 may correspond to block 509 of FIG. 5.

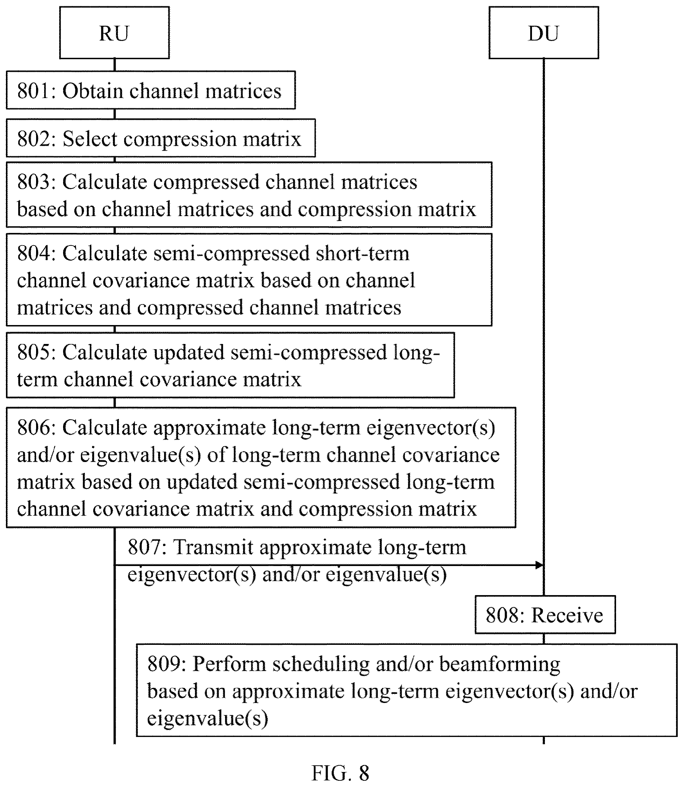

FIG. 8 illustrates fourth alternative signaling between a radio unit of a distributed access node and a distributed unit of the distributed access node for estimating (or approximating) eigenvectors and/or eigenvalues of a long-term channel covariance matrix of a radio channel according to embodiments. The radio unit of FIG. 8 may be a radio unit 116, 118 of FIG. 1 and/or the distributed unit of FIG. 8 may be a distributed unit 104 of FIG. 1.

The procedure of FIG. 8 corresponds to a large extent to the procedure of FIG. 5 discussed above. Namely, the two procedures differ only in regards to which entity (RU or DU) carries out the calculation of the updated semi-compressed long-term channel covariance matrix and of the approximate long-term eigenvectors and/or eigenvalues of the long-term channel covariance matrix. Blocks 801 to 804, 809 of FIG. 8 may fully correspond to blocks 501 to 504, 509 of FIG. 5 (or equally to blocks 201 to 204 of FIG. 2 or blocks 401 to 404 of FIG. 4).

In FIG. 8, following the execution of processes of blocks 801 to 804 (corresponding fully to processes of blocks 501 to 504 of FIG. 5), the radio unit calculates, in block 805, an updated semi-compressed long-term channel covariance matrix based at least on a previous (i.e., previously calculated) semi-compressed long-term channel covariance matrix and the semi-compressed short-term channel covariance matrix calculated in block 804. It is assumed here that the previous semi-compressed long-term channel covariance matrix is maintained in at least one memory of the radio unit or in at least one (external) memory accessible by the radio unit. The previous semi-compressed long-term channel covariance matrix may have been calculated during the previous execution of the procedure of FIG. 8 (based on the previous semi-compressed long-term channel covariance matrix). In other words, the calculation of block 805 may correspond to an iterative update (namely, a type of exponential average) of the semi-compressed long-term channel covariance matrix. The initial semi-compressed long-term channel covariance matrix determined during the initial execution of FIG. 8 may be, e.g., equal to the semi-compressed short-term channel matrix. Any of the further features and definitions discussed in connection with block 507 of FIG. 5 may correspond, *mutatis mutandis,* also here.

The radio unit may store the updated semi-compressed long-term channel covariance matrix to the at least one memory of the radio unit or to the at least one (external) memory accessible by the radio unit.

The radio unit calculates, in block 806, one or more approximate long-term eigenvectors and/or one or more approximate long-term eigenvalues of a long-term channel covariance matrix based on an approximation of the long-term channel covariance matrix. Here, the approximation of the long-term channel covariance matrix is based on the updated semi-compressed long-term channel covariance matrix and the (short-term) compression matrix. Similar to previous embodiments, the approximation may be the Nyström approximation. The calculation of block 806 may correspond fully to the calculation of block 508 of FIG. 5 (the only difference being the entity carrying out the calculation).

In some embodiments, blocks 805, 806 may be replaced with blocks 705, 708 of FIG. 7 (carried out, in this case, both by the radio unit). In other words, in some embodiments, the radio unit may be configured to calculate one or more approximate long-term eigenvector and/or eigenvalues by applying stochastic power iteration, as opposed to based on exponentially averaging the short-term semi-compressed channel covariance matrices.

The radio unit transmits, in message 807, said one or more approximate long-term eigenvectors and/or one or more approximate long-term eigenvalues of the long-term channel covariance matrix to the distributed unit. The distributed unit receives, in block 808, said one or more approximate long-term eigenvectors and/or one or more approximate long-term eigenvalues of the long-term channel covariance matrix. Thereafter, the scheduling and/or beamforming may be carried out, in block 809, by the distributed unit, using at least said one or more approximate long-term eigenvectors and/or one or more approximate long-term eigenvalues of the long-term channel covariance matrix, similar to as described in connection with previous embodiments. Block 809 may correspond to block 509 of FIG. 5.

In some embodiments, some of the actions carried out by the radio unit and/or the distributed unit in different embodiments described in connection with FIGs. 2 to 8 may be combined. For example, in some embodiments, the radio unit may calculate the one or more approximate short-term eigenvectors and/or eigenvalues (as described in connection with FIG. 6) and/or the one or more approximate long-term eigenvectors and/or eigenvalues (as described in connection with FIG. 8). Moreover, the radio unit may transmit, to the distributed unit, the semi-compressed short-term channel covariance matrix and the compression matrix (as described in connection with FIG. 2, 4 or FIG. 5) and/or the one or more approximate short-term eigenvectors and/or eigenvalues (as described in connection with FIG. 6 or 7) and/or the one or more approximate long-term eigenvectors and/or eigenvalues (as described in connection with FIG. 8).

While the above embodiments were directed to a distributed access node architecture, in other embodiments, similar functionalities may be carried out by non-distributed access node. Namely, in some embodiments, a non-distributed access node may carry out at least one of:

- blocks 201 to 205, 208 of FIG. 2,
- blocks 301 to 304 of FIG. 3,
- blocks 401 to 504, 407 to 408 (optionally also block 411) of FIG. 4,
- blocks 501 to 504, 507 to 509 of FIG. 5,
- blocks 601 to 605, 608 to 611 of FIG. 6,
- blocks 701 to 705, 708 to 709 of FIG. 7, or
- blocks 801 to 806, 809 of FIG. 8.

The discussion provided above for the embodiments directed to the distributed access node may apply, *mutatis mutandis,* for the embodiments directed to a non-distributed access node.

The blocks, related functions, and information exchanges described above by means of FIGs. 2 to 8 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

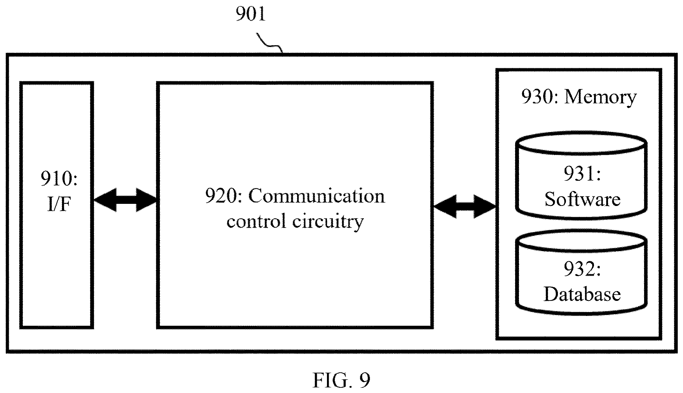

FIG. 9 provides an apparatus 901 according to some embodiments. Specifically, FIG. 9 may illustrate an apparatus configured to carry out at least some of the functions described above. The apparatus 901 may be or form a part of, e.g., a computing device. The apparatus 901 may be or form a part of a (non-distributed) access node or at least one of an RU or a DU of a distributed access node.

The apparatus 901 may comprise one or more communication control circuitry 920, such as at least one processor, and at least one memory 930, including one or more algorithms 931, such as a computer program code (software) wherein the at least one memory and the computer program code (software) are configured, with the at least one processor, to cause the apparatus 901 to carry out any one of the exemplified functionalities of the RU or DU or the non-distributed access node described above, e.g., in connection with any of FIGs. 2 to 8. Said at least one memory 930 may also comprise at least one database 932.

When the one or more communication control circuitry 920 comprises more than one processor, the apparatus 901 may be a distributed device wherein processing of tasks takes place in more than one physical unit. Each of the at least one processor may comprise one or more processor cores. A processing core may comprise, for example, a Cortex-A12 processing core manufactured by ARM Holdings or a Zen processing core designed by Advanced Micro Devices Corporation. The one or more control circuitry 920 may comprise at least one Qualcomm Snapdragon and/or Intel Atom processor.

Referring to FIG. 9, the one or more communication control circuitry 920 of the apparatus 901 is configured to carry out functionalities described above by means of any of elements of FIGs. 2 to 8 using one or more individual circuitries. It may also be feasible to use specific integrated circuits, such as DSP block, digital signal processor, ASIC or FPGA, or other components and devices for implementing said functionalities in accordance with different embodiments.

Referring to FIG. 9, the apparatus 901 may further comprise different interfaces 910 such as one or more communication interfaces comprising hardware and/or software for realizing communication connectivity according to one or more communication protocols. For example, the one or more communication interfaces 910 may comprise at least one interface enabling communication between the apparatus and one or more terminal devices. Additionally or alternatively, the one or more communication interfaces 910 may comprise at least one interface enabling communication between the apparatus and at least one core network node and/or at least one interface enabling communication between the apparatus and one or more (other) access nodes. If the apparatus 901 forms a part of a distributed access node, the one or more communication interfaces 910 may comprise one or more interfaces providing one or more connections between the apparatus and other parts of the distributed access node (e.g., if the apparatus is an RU, between the apparatus and at least one DU or, if the apparatus is a DU, between the apparatus and at least one RU and at least one CU).

Referring to FIG. 9, the memory 930 may be implemented using any suitable data storage technology, such as semiconductor based memory devices, flash memory, magnetic memory devices and systems, optical memory devices and systems, fixed memory and removable memory.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware.

In an embodiment, at least some of the processes described in connection with FIGs. 2 to 8 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, register, multiply-accumulate (MAC) unit, delay element, RAM, ROM, software, firmware, display, user interface, display circuitry, user interface circuitry, user interface software, display software, circuit, filter (low-pass, high-pass, bandpass and/or bandstop), sensor, circuitry, inverter, capacitor, inductor, resistor, operational amplifier, diode and transistor. In some embodiments, at least some of the processes may be implemented using discrete components. In an embodiment, at least some of the processes described in connection with FIGs. 2 to 8 may be carried out by an apparatus comprising corresponding hardware means for carrying out at least some of the described processes. Said hardware means may comprise at least one of: a multiplier, an adder, a MAC unit, a barrel shifter, a register, a shift register, a memory unit, a control logic, a clocking circuitry or a finite state machine.

Embodiments as described above may also be carried out, fully or at least in part, in the form of a computer process defined by a computer program or portions thereof. Embodiments of the methods described in connection with FIGs. 2 to 8 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, tele-communications signal, and software distribution package, for example. The computer program medium may be a non-transitory medium. Coding of software for carrying out the embodiments as shown and described is well within the scope of a person of ordinary skill in the art.

The term "non-transitory", as used herein, is a limitation of the medium itself (that is, tangible, not a signal) as opposed to a limitation on data storage persistency (for example, RAM vs. ROM).

Reference throughout this specification to one embodiment or an embodiment means that a particular feature, structure, or characteristic described in connection with the embodiment is included in at least one embodiment of the present solution. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present solution may be referred to herein along with alternatives for the various components thereof. It is understood that such embodiments, examples, and alternatives are not to be construed as de facto equivalents of one another, but are to be considered as separate and autonomous representations of the present solution.

Even though embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

INDUSTRIAL APPLICABILITY

At least some embodiments find industrial application in wireless communications.

**Claims**

1.   An apparatus comprising:

> at least one processor; and
> at least one memory storing instructions that, when executed by the at least one processor, cause the apparatus at least to perform:

>> obtaining a plurality of channel matrices corresponding to a plurality of frequencies;
>> selecting a compression matrix for reducing a size of the plurality of channel matrices according to a compression matrix selection scheme;
>> calculating, based on the plurality of channel matrices and the compression matrix, a plurality of compressed channel matrices;
>> calculating, based on the plurality of channel matrices and the plurality of compressed channel matrices, a semi-compressed short-term channel covariance matrix; and

>> performing at least one of:

>>> - transmitting the semi-compressed short-term channel covariance matrix and the compression matrix to a distributed unit of a distributed access node;
>>> - calculating one or more approximate short-term eigenvectors and/or one or more approximate short-term eigenvalues of a short-term channel covariance matrix based on an approximation of the short-term channel covariance matrix and transmitting the one or more approximate short-term eigenvectors and/or the one or more approximate short-term eigenvalues to the distributed unit of the distributed access node, wherein the approximation of the short-term channel covariance matrix is based on the semi-compressed short-term channel covariance matrix and the compression matrix; or

- calculating an updated semi-compressed long-term channel covariance matrix based at least on a previous semi-compressed long-term channel covariance matrix and the semi-compressed short-term channel covariance matrix, calculating one or more approximate long-term eigenvectors and/or one or more approximate long-term eigenvalues of a long-term channel covariance matrix based on an approximation of the long-term channel covariance matrix, and transmitting the one or more approximate long-term eigenvectors and/or the one or more approximate long-term eigenvalues to the distributed unit of the distributed access node, the previous semi-compressed long-term channel covariance matrix being maintained in the at least one memory or in at least one external memory accessible by the apparatus, and the approximation of the long-term channel covariance matrix being based on the updated semi-compressed long-term channel covariance matrix and the compression matrix.

2. The apparatus of claim 1, wherein the calculating of the semi-compressed short-term channel covariance matrix comprises:
calculating the semi-compressed short-term channel covariance matrix as an average of matrix products of conjugate transposes of the plurality of channel matrices and the corresponding plurality of compressed channel matrices.

3. The apparatus according to any preceding claim, wherein the selecting of the compression matrix according to the compression matrix selection scheme comprises one of:

   selecting a pre-defined compression matrix,
   selecting each column of the compression matrix randomly or according to a pre-defined rule from columns of an identity matrix or other permutation matrix,
   selecting each element of the compression matrix randomly based on a pre-defined probability distribution, or determining the compression matrix based on all or some of previously calculated plurality of approximate short-term eigenvectors of a previous short-term channel covariance matrix, the previously calculated plurality of short-term eigenvectors being maintained in the at least one memory or in at least one external memory accessible by the apparatus.

4. The apparatus of claim 3, wherein the selecting of the compression matrix according to the compression matrix selection scheme comprises the determining of the compression matrix based on said all or some of previously calculated plurality of previous approximate short-term eigenvectors of the previous short-term channel covariance matrix comprising:

   determining the compression matrix to be a matrix comprising said all or some of the previously calculated plurality of previous approximate short-term eigenvectors of the previous short-term channel covariance matrix; or
   determining each element of the compression matrix to have a value defined based on a value of a corresponding element of a previous eigenvector matrix comprising the previously calculated plurality of approximate short-term eigenvectors; or
   determining the compression matrix to be a matrix calculated as follows:

   - determining a norm squared of each row of a previous eigenvector matrix comprising the previously calculated plurality of approximate short-term eigenvectors as columns,
   - identifying $q$ row indices of the previous eigenvector corresponding to $q$ largest norm squared values, $q$ being a positive integer, and
   - selecting the compression matrix to comprise $q$ columns of an identity matrix, wherein the $q$ columns have column indices matching said $q$ row indices.

5. The apparatus according to any preceding claim, wherein the approximation of the short-term channel covariance matrix is a Nyström approximation of the short-term channel covariance matrix and the calculating of the one or more approximate short-term eigenvectors and/or the one or more approximate short-term eigenvalues of the short-term channel covariance matrix is based on a singular value decomposition, SVD, of a constituent matrix of a Gramian matrix, the Gramian matrix being equal to the Nyström approximation of the short-term channel covariance matrix.

6. The apparatus of claim 5, wherein the calculating of the one or more approximate short-term eigenvectors and/or the one or more approximate short-term eigenvalues of the short-term channel covariance matrix comprises:

calculating a fully compressed short-term channel covariance matrix based on the compression matrix and the semi-compressed short-term channel covariance matrix;
calculating the constituent matrix of the Gramian matrix as a matrix product of the semi-compressed short-term channel covariance matrix and an inverse square root of the fully compressed short-term channel covariance matrix;
calculating the SVD of the constituent matrix of the Gramian matrix; and
determining, based on the SVD, the one or more approximate short-term eigenvalues and/or the one or more approximate short-term eigenvectors.

7. The apparatus of claim 6, wherein the calculating of the fully compressed short-term channel covariance matrix comprises:

- calculating the fully compressed short-term channel covariance matrix as a matrix product of a conjugate transpose of the compression matrix and the semi-compressed short-term channel covariance matrix, and/or the determining of the one or more approximate short-term eigenvalues and the one or more approximate short-term eigenvectors based on the SVD comprises:
- determining the one or more approximate short-term eigenvalues as squares of $L$ largest singular values of the constituent matrix, wherein L is a positive integer equal to or smaller than a size of a compressed dimension of the compression matrix; and
- determining the one or more approximate short-term eigenvectors as $L$ left-singular vectors of the constituent matrix corresponding to the L largest singular values.

8. An apparatus comprising:

at least one processor; and
at least one memory storing instructions that, when executed by the at least one processor, cause the apparatus at least to perform:
receiving, from a radio unit of a distributed access node, a compression matrix for reducing a size of a plurality of channel matrices corresponding to a plurality of frequencies and a semi-compressed short-term channel covariance matrix formed based on the plurality of channel matrices and the compression matrix;
performing at least one of:

- calculating one or more approximate short-term eigenvectors and/or one or more approximate short-term eigenvalues of a short-term channel covariance matrix based on an approximation of the short-term channel covariance matrix, wherein the approximation of the short-term channel covariance matrix is based on the semi-compressed short-term channel covariance matrix and the compression matrix, or
- calculating an updated semi-compressed long-term channel covariance matrix based at least on a previous semi-compressed long-term channel covariance matrix and the semi-compressed short-term channel covariance matrix and calculating one or more approximate long-term eigenvectors and/or one or more approximate long-term eigenvalues of a long-term channel covariance matrix based on an approximation of the long-term channel covariance matrix, wherein the previous semi-compressed long-term channel covariance matrix is maintained in the at least one memory or in at least one external memory accessible by the apparatus and the approximation of the long-term channel covariance matrix is based on the updated semi-compressed long-term channel covariance matrix and the compression matrix; and

performing scheduling and/or beamforming based on the one or more approximate short-term eigenvectors and/or the one or more approximate short-term eigenvalues and/or the one or more approximate long-term eigenvectors and/or the one or more approximate long-term eigenvalues.

9. An apparatus comprising:

at least one processor; and
at least one memory storing instructions that, when executed by the at least one processor, cause the apparatus at least to perform:
receiving, from a radio unit of a distributed access node, one or more approximate short-term eigenvectors and one or more approximate short-term eigenvalues of a short-term channel covariance matrix;
performing either:

- selecting a compression matrix according to a compression matrix selection scheme,
- calculating an updated semi-compressed long-term channel covariance matrix based at least on the compression matrix, a previous semi-compressed long-term channel covariance matrix, the one or more approximate short-term eigenvectors and the one or more approximate short-term eigenvalues, the previous semi-compressed long-term channel covariance matrix being maintained in the at least one memory or in at least one external memory accessible by the apparatus, and
- calculating one or more approximate long-term eigenvectors and/or one or more approximate long-term eigenvalues of a long-term channel covariance matrix based on an approximation of the long-term channel covariance matrix, wherein the approximation of the long-term channel covariance matrix is based on the updated semi-compressed long-term channel covariance matrix and the compression matrix, or
- calculating one or more approximate long-term eigenvectors and/or one or more approximate long-term eigenvalues of a long-term channel covariance matrix by applying a stochastic power iteration scheme taking as inputs the one or more approximate short-term eigenvectors and/or the one or more approximate short-term eigenvalues of the short-term channel covariance matrix as well as one or more previous approximate long-term eigenvectors and/or one or more previous approximate long-term eigenvalues of a previous long-term channel covariance matrix, the one or more previous approximate long-term eigenvectors and/or the one or more previous approximate long-term eigenvalues being maintained in the at least one memory or in at least one external memory accessible by the apparatus; and

performing scheduling and/or beamforming based on the one or more approximate long-term eigenvectors and/or the one or more approximate long-term eigenvalues.

10. The apparatus of claim 9, wherein the calculating of the updated long-term channel covariance matrix comprises: calculating the updated semi-compressed long-term channel covariance matrix $Y_{\mathrm{LT},t}$ according to

$$\mathbf{Y}_{\mathrm{LT},t} = (1-\alpha)\widehat{\mathbf{V}}_{\mathrm{LT},t-1}\widehat{\mathbf{\Lambda}}_{\mathrm{LT},t-1}\big(\widehat{\mathbf{V}}_{\mathrm{LT},t-1}^{\mathrm{H}}\mathbf{\Omega}_{\mathrm{LT},t}\big) + \alpha\widehat{\mathbf{V}}_{\mathrm{ST},t}\widehat{\mathbf{\Lambda}}_{\mathrm{ST},t}\big(\widehat{\mathbf{V}}_{\mathrm{ST},t}^{\mathrm{H}}\mathbf{\Omega}_{\mathrm{LT},t}\big),$$

wherein $\alpha$ is a pre-defined weighting term, $\hat{\mathbf{V}}_{\mathrm{LT},t-1}$ is an eigenvector matrix comprising previous approximate eigenvectors of the previous long-term channel covariance matrix, $\hat{\Lambda}_{\mathrm{LT},t-1}$ is a diagonal eigenvalue matrix comprising previous approximate eigenvalues of the previous long-term channel covariance matrix, $\Omega_{\mathrm{LT},t}$ is the compression matrix, $\hat{\mathbf{V}}_{\mathrm{ST},t}$ is an eigenvector matrix comprising the one or more approximate short-term eigenvectors and 'H' is a conjugate transpose operation.

11. The apparatus of claim 9, wherein the applying of the stochastic power iteration scheme for the calculating of the one or more approximate long-term eigenvectors of the long-term channel covariance matrix comprises:

calculating an intermediary matrix $\tilde{\mathbf{V}}_{\mathrm{LT},t}$ according to:

$$\widetilde{\mathbf{V}}_{\mathrm{LT},t} = \widehat{\mathbf{V}}_{\mathrm{LT},t-1} + \alpha\widehat{\mathbf{V}}_{\mathrm{ST},t}\widehat{\mathbf{\Lambda}}_{\mathrm{ST},t}\widehat{\mathbf{V}}_{\mathrm{ST},t}^{\mathrm{H}}\widehat{\mathbf{V}}_{\mathrm{LT},t-1}$$

wherein $\hat{\mathbf{V}}_{\mathrm{LT},t-1}$ is the previous long-term eigenvector matrix comprising the one or more previous approximate long-term eigenvectors, $\alpha$ is a pre-defined step size, $\hat{\mathbf{V}}_{\mathrm{ST},t}$ is an eigenvector matrix comprising the one or more approximate short-term eigenvectors, $\hat{\Lambda}_{\mathrm{ST},t}$ is a diagonal eigenvalue matrix comprising the one or more approximate short-term eigenvalues, and 'H' is a conjugate transpose operation; and
performing Gram-Schmidt orthogonalization on the intermediary matrix to obtain an updated approximate long-term eigenvector matrix comprising the one or more approximate long-term eigenvectors of the long-term channel covariance matrix, and/or
wherein the applying of the stochastic power iteration scheme for the calculating of the one or more approximate long-term eigenvalues of the long-term channel covariance matrix comprises:
calculating an updated long-term eigenvalue vector $\hat{\lambda}_{\mathrm{LT},t}$ comprising the one or more approximate long-term eigenvalues of the long-term channel covariance matrix according to:

$$\hat{\lambda}_{\mathrm{LT},t} = (1 - \alpha)\hat{\lambda}_{\mathrm{LT},t-1} + \alpha \operatorname{diag}\big(\mathbf{B}_t^{\mathrm{H}}\hat{\mathbf{\Lambda}}_{\mathrm{ST},t}\mathbf{B}_t\big),$$

wherein $\alpha$ is a pre-defined step size, $\hat{\lambda}_{\mathrm{LT},t-1}$ is a previous updated long-term eigenvalue vector comprising one or more previous approximate long-term eigenvalues, $\hat{\Lambda}_{\mathrm{ST},t}$ is a diagonal eigenvalue matrix formed based on the one or more approximate short-term eigenvalues, matrix $\mathrm{B}_t$ is defined as $\mathbf{B}_t = \hat{\mathbf{V}}_{\mathrm{ST},t}^{\mathrm{H}}\hat{\mathbf{V}}_{\mathrm{LT},t-1}$ and 'diag' is a function extracting diagonal elements of a matrix into a vector, $\hat{\mathbf{V}}_{\mathrm{LT},t-1}$ being the previous long-term eigenvector matrix comprising the one or more previous approximate long-term eigenvectors and $\hat{\mathbf{V}}_{\mathrm{ST},t}$ being a short-term eigenvector matrix comprising the one or more approximate short-term eigenvectors.

12. The apparatus according to any of claims 1 to 8, wherein the calculating of the updated semi-compressed long-term channel covariance matrix comprises:
    calculating the updated long-term channel covariance matrix as a sum of a product of a first pre-defined weighting term and the previous semi-compressed long-term channel covariance matrix and a product of a second pre-defined weighting term and the semi-compressed short-term channel covariance matrix, wherein the first and second pre-predefined weighting terms are positive real numbers smaller than one such that a sum of the first and second pre-predefined weighting terms is equal to one.

13. The apparatus according to any preceding claim, wherein the approximation of the long-term channel covariance matrix is a Nyström approximation of the long-term channel covariance matrix and the calculating of the one or more approximate long-term eigenvectors and/or the one or more approximate long-term eigenvalues of the long-term channel covariance matrix is based on an SVD of a constituent matrix of a Gramian matrix, the Gramian matrix being equal to the Nyström approximation of the long-term channel covariance matrix.

14. The apparatus of claim 13, wherein the calculating of the one or more approximate long-term eigenvectors and/or the one or more approximate long-term eigenvalues of the long-term channel covariance matrix comprises:

    calculating a fully compressed long-term channel covariance matrix based on the compression matrix and the semi-compressed long-term channel covariance matrix;
    calculating the constituent matrix of the Gramian matrix as a matrix product of the semi-compressed long-term channel covariance matrix and an inverse square root of the fully compressed long-term channel covariance matrix;
    calculating the SVD of the constituent matrix of the Gramian matrix; and
    determining, based on the SVD, the one or more approximate long-term eigenvalues and/or the one or more approximate long-term eigenvectors.

15. An apparatus comprising:

    at least one processor; and
    at least one memory storing instructions that, when executed by the at least one processor, cause the apparatus at least to perform:

        obtaining a plurality of channel matrices corresponding to a plurality of frequencies;
        selecting a compression matrix for reducing a size of the plurality of channel matrices according to a compression matrix selection scheme;
        calculating, based on the plurality of channel matrices and the compression matrix, a plurality of compressed channel matrices;
        calculating, based on the plurality of channel matrices and the plurality of compressed channel matrices, a semi-compressed short-term channel covariance matrix;
        calculating one or more approximate short-term eigenvectors and/or one or more approximate short-term eigenvalues of a short-term channel covariance matrix based on an approximation of the short-term channel covariance matrix, wherein the approximation of the short-term channel covariance matrix is based on the semi-compressed short-term channel covariance matrix and the compression matrix; and
        performing scheduling and/or beamforming based on the one or more short-term eigenvectors and/or the one or more short-term eigenvalues.

FIG. 1

```
┌─────────────────┐                                    ┌─────────────────┐
│       RU        │                                    │       DU        │
└─────────────────┘                                    └─────────────────┘
        │                                                       │
┌───────────────────────────────┐                              │
│ 201: Obtain channel matrices  │                              │
└───────────────────────────────┘                              │
┌───────────────────────────────┐                              │
│ 202: Select compression matrix│                              │
└───────────────────────────────┘                              │
┌────────────────────────────────────────────────┐            │
│ 203: Calculate compressed channel matrices     │            │
│ based on channel matrices and compression matrix│           │
└────────────────────────────────────────────────┘            │
┌────────────────────────────────────────────────┐            │
│ 204: Calculate semi-compressed short-term      │            │
│ channel covariance matrix based on channel     │            │
│ matrices and compressed channel matrices       │            │
└────────────────────────────────────────────────┘            │
┌─────────────────────────────────────────────────────┐       │
│ 205: Calculate approximate short-term eigenvector(s)│        │
│ and/or eigenvalue(s) of short-term channel covariance│       │
│ matrix based on approximation of short-term channel │        │
│ covariance matrix                                   │        │
└─────────────────────────────────────────────────────┘       │
        │   206: Transmit approximate short-term               │
        │   eigenvector(s) and/or eigenvalue(s)  ─────────────►│
        │                                          ┌────────────────────┐
        │                                          │  207: Receive      │
        │                                          └────────────────────┘
        │   ┌──────────────────────────────────────────────────────────┐
        │   │ 208: Perform scheduling and/or beamforming               │
        │   │ based on approximate short-term                          │
        │   │ eigenvector(s) and/or eigenvalue(s)                      │
        │   └──────────────────────────────────────────────────────────┘
```

FIG. 2

301: Calculate fully compressed channel covariance matrix based on compression matrix and semi-compressed short-term channel covariance matrix

302: Calculate constituent matrix of Gramian matrix which is equal to Nyström approximation of short-term channel covariance matrix

303: Calculate SVD of constituent matrix

304: Determine, based on SVD, approximate short-term eigenvalue(s) and/or approximate short-term eigenvector(s)

FIG. 3

RU   DU

401: Obtain channel matrices

402: Select compression matrix

403: Calculate compressed channel matrices based on channel matrices and compression matrix

404: Calculate semi-compressed short-term channel covariance matrix based on channel matrices and compressed channel matrices

405: Transmit semi-compressed short-term channel covariance matrix and compression matrix

406: Receive

407: Calculate approximate short-term eigenvector(s) and/or eigenvalue(s) of short-term channel covariance matrix based on approximation of short-term channel covariance matrix

408: Perform scheduling and/or beamforming based on approximate short-term eigenvector(s) and/or eigenvalue(s)

409: Transmit approximate short-term eigenvector(s) and/or eigenvalue(s)

410: Receive

411: Store

FIG. 4

RU

DU

501: Obtain channel matrices

502: Select compression matrix

503: Calculate compressed channel matrices
based on channel matrices and compression matrix

504: Calculate semi-compressed short-term
channel covariance matrix based on channel
matrices and compressed channel matrices

505: Transmit semi-compressed short-term
channel covariance matrix and compression
matrix

506: Receive

507: Calculate updated semi-compressed long-
term channel covariance matrix

508: Calculate approximate long-term eigenvector(s)
and/or eigenvalue(s) of long-term channel covariance
matrix based on updated semi-compressed long-term
channel covariance matrix and compression matrix

509: Perform scheduling and/or beamforming
based on approximate long-term eigenvector(s) and/or
eigenvalue(s)

FIG. 5

```
┌─────────┐                                          ┌─────────┐
│   RU    │                                          │   DU    │
└─────────┘                                          └─────────┘
┌──────────────────────────────┐
│ 601: Obtain channel matrices  │
└──────────────────────────────┘
┌──────────────────────────────┐
│ 602: Select compression matrix │
└──────────────────────────────┘
┌──────────────────────────────────────────────┐
│ 603: Calculate compressed channel matrices      │
│ based on channel matrices and compression matrix │
└──────────────────────────────────────────────┘
┌──────────────────────────────────────────────┐
│ 604: Calculate semi-compressed short-term       │
│ channel covariance matrix based on channel      │
│ matrices and compressed channel matrices        │
└──────────────────────────────────────────────┘
┌──────────────────────────────────────────────┐
│ 605: Calculate approximate short-term eigenvector(s) │
│ and/or eigenvalue(s) of short-term channel covariance │
│ matrix based on based on approximation of short-term  │
│ channel covariance matrix                              │
└──────────────────────────────────────────────┘
```

606: Transmit approximate short-term eigenvector(s) and/or eigenvalue(s)

607: Receive

608: Select compression matrix

609: Calculate updated semi-compressed long-term channel covariance matrix

610: Calculate approximate long-term eigenvector(s) and/or eigenvalue(s) of long-term channel covariance matrix based on updated semi-compressed long-term channel covariance matrix and compression matrix

611: Perform scheduling and/or beamforming based on approximate long-term eigenvector(s) and/or eigenvalue(s)

FIG. 6

RU

DU

701: Obtain channel matrices

702: Select compression matrix

703: Calculate compressed channel matrices based on channel matrices and compression matrix

704: Calculate semi-compressed short-term channel covariance matrix based on channel matrices and compressed channel matrices

705: Calculate approximate short-term eigenvector(s) and/or eigenvalue(s) of short-term channel covariance matrix based on semi-compressed short-term channel covariance matrix and compression matrix

706: Transmit approximate short-term eigenvector(s) and/or eigenvalue(s)

707: Receive

708: Calculate approximate long-term eigenvector(s) and/or eigenvalue(s) of long-term channel covariance matrix by applying stochastic power iteration

709: Perform scheduling and/or beamforming based on approximate long-term eigenvector(s) and/or eigenvalue(s)

FIG. 7

RU          DU

801: Obtain channel matrices

802: Select compression matrix

803: Calculate compressed channel matrices based on channel matrices and compression matrix

804: Calculate semi-compressed short-term channel covariance matrix based on channel matrices and compressed channel matrices

805: Calculate updated semi-compressed long-term channel covariance matrix

806: Calculate approximate long-term eigenvector(s) and/or eigenvalue(s) of long-term channel covariance matrix based on updated semi-compressed long-term channel covariance matrix and compression matrix

807: Transmit approximate long-term eigenvector(s) and/or eigenvalue(s)

808: Receive

809: Perform scheduling and/or beamforming based on approximate long-term eigenvector(s) and/or eigenvalue(s)

FIG. 8

901

910:
I/F

920: Communication
control circuitry

930: Memory

931:
Software

932:
Database

FIG. 9

| | Europäisches Patentamt European Patent Office Office européen des brevets | **EUROPEAN SEARCH REPORT** | **Application Number** EP 25 20 2483 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/058560 A1 (CHEN BO [CN] ET AL) 21 February 2019 (2019-02-21) * paragraphs [0059], [0062], [0063], [0072], [0073] * * figures 9A,9B * | 1-4,8,15 | INV. H04B7/06 H04L25/02 |
| X | INTEL CORPORATION: "On CSI feedback Type II", 3GPP DRAFT; R1-1704730 ON CSI FEEDBACK TYPE II_R3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 25 March 2017 (2017-03-25), XP051251458, Retrieved from the Internet: URL:http://www.3gpp.org/ftp/tsg_ran/WG1_RL 1/TSGR1_88b/Docs/ [retrieved on 2017-03-25] * the whole document * | 1-4,8,15 | |

| | TECHNICAL FIELDS SEARCHED (IPC) |
|---|---|
| | H04B H04L |

The present search report has been drawn up for all claims

| Place of search | Date of completion of the search | Examiner |
|---|---|---|
| Munich | 25 November 2025 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 25 20 2483

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2-4(completely); 1, 8, 15(partially)

☐ The present supplementary European search report has been drawn up for those parts of the European patent application which relate to the invention first mentioned in the claims (Rule 164 (1) EPC).

**LACK OF UNITY OF INVENTION**
**SHEET B**

Europäisches
Patentamt
European
Patent Office
Office européen
des brevets

**Application Number**

EP 25 20 2483

The Search Division considers that the present European patent application does not comply with the requirements of unity of invention and relates to several inventions or groups of inventions, namely:

1. claims: 2-4(completely); 1, 8, 15(partially)

   Compression of a covariance matrix
   ---

2. claims: 5-7(completely); 1, 8, 9, 13, 15(partially)

   Avoiding large scale eigenvalue/eigenvector decomposition by employing Nyström approximation
   ---

3. claims: 1, 8, 9, 15(all partially)

   Selection of information to send over the front haul link and how to distribute computation between a radio and an distributed units
   ---

4. claims: 10-12, 14(completely); 1, 8, 9, 13, 15(partially)

   Determination of long-term channel covariance matrices and its corresponding beamforming
   ---

## ANNEX TO THE EUROPEAN SEARCH REPORT
## ON EUROPEAN PATENT APPLICATION NO.

EP 25 20 2483

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | Publication date | Patent family member(s) | Publication date |
|---|---|---|---|
| US 2019058560 A1 | 21-02-2019 | AU 2017240856 A1 | 06-09-2018 |
| | | BR 112018069917 A2 | 05-02-2019 |
| | | CA 3016260 A1 | 05-10-2017 |
| | | CN 109314559 A | 05-02-2019 |
| | | EP 3437208 A1 | 06-02-2019 |
| | | JP 7062597 B2 | 06-05-2022 |
| | | JP 2019518348 A | 27-06-2019 |
| | | US 2019058560 A1 | 21-02-2019 |
| | | WO 2017166219 A1 | 05-10-2017 |
| | | WO 2017166940 A1 | 05-10-2017 |

For more details about this annex : see Official Journal of the European Patent Office, No. 12/82

EPO FORM P0459